# EUROPEAN PATENT APPLICATION

(11) **EP 1 909 200 A1**
(43) Date of publication of application: **09.04.2008**
(21) Application number: 07253527.1
(22) Date of filing: 06.09.2007
(51) Int. Cl.: G06F 17/30

(54) **Apparatus, method and computer program product for processing information**

(30) Priority: 26.09.2006 JP 2006261351
(71) Applicant: Kabushiki Kaisha Toshiba, Minato-ku, Tokyo 105-8001 (JP)
(72) Inventor: Suzuki, Masaru, Tokyo (JP); Ishitani, Yasuto, Tokyo (JP); Fume, Kosei, Tokyo (JP)
(74) Representative: Maury, Richard Philip

(57) **Abstract**

An information processing apparatus (100) includes a storage to store document data; a document-category identifying unit (104) that identifies a document category indicating a use of a document based on a content of the document data; a display unit that displays the document data; a input receiving unit (109) that receives an input designation to at least part of the document data displayed by the display unit; a form identifying unit that identifies a designation form of the input designation; a range specifying unit (110) that specifies an applicable range of the input designation; and a processing unit (121) that processes the applicable range based on the designation form and the document category.

## Description

### CROSS-REFERENCE TO RELATED APPLICATIONS

This application is based upon and claims the benefit of priority from the prior Japanese Patent Application No. 2006-261351, filed on Sep. 26, 2006; the entire contents of which are incorporated herein by reference.

### BACKGROUND OF THE INVENTION

### 1. Field of the Invention

The present invention relates to an apparatus, a method, and a computer program product for processing information to be used for deciding processing to be executed when a designation to specify document data is received.

### 2. Description of the Related Art

Graphical user interfaces (GUI) have been conventionally widely used as a technology for receiving input of an action in response to presented information, after a computer such as a personal computer (PC) presents the information to a user.

A GUI often uses a method in which when the user points at an object on the screen with a pointing device, such as a mouse, the GUI displays a menu screen on which actions desired to be performed on the object are listed, and then receives a selection by the user from among the actions listed on the menu screen. For example, according to a technology, so-called a context menu in the GUI, the GUI displays a menu screen on which only selectable actions are shown in accordance with a data format of the object specified by the user. Accordingly, input of an action to the object from the user can be simplified.

In another example of a technology for receiving input of actions from the user, there is a technology by which an application program for viewing electronic mails (e-mails) automatically converts a uniform resource locator (URL) written in an e-mail or a portion identified as a mail address into a hyperlink and presents the hyperlink, thereby being ready to receive input instructed by clicking or double-clicking at the portion of the hyperlink with a pointing device.

According to such technologies, usable actions are limited depending on a data format of each object to be pointed or a format of each word in the document. However, actions are determined only in accordance with the data format of the object to be pointed, and limitations of usable actions are not based on meaning or content of the object.

Therefore, a technology for narrowing down appropriate actions by identifying meaning or content of the object is proposed. For example, according to JP-A 2006-65754 (KOKAI), when a user presents selectable actions by using an annotation onto displayed document data, actions to be displayed are narrowed down by identifying an intention of the user based on content of words specified by the annotation as well as a type of the input annotation.

To achieve such processing, the technology disclosed in JP-A 2006-65754 (KOKAI) includes a dictionary for words. By using the dictionary, a word included in the document is added with attribution information that indicates a meaning of the word in advance. Based on the added attribution information, when input of an annotation is received from a user, content of a word specified by the annotation can be analyzed, so that actions can be limited to appropriate actions, and then the limited appropriate actions can be displayed.

However, the technology disclosed in JP-A 2006-65754 (KOKAI) cannot prepare a new word included in a displayed document, such as the name of a new product or a term for a new technology, in a dictionary in advance. Consequently, the word cannot be given with appropriate attribution information. For this reason, when the word is selected, the intention of the user cannot be precisely identified. In this way, the technology disclosed in JP-A 2006-65754 (KOKAI) has a problem that when input of an annotation is received, processing appropriate to an applicable range marked with the annotation cannot be presented without attribution information of the word.

### SUMMARY OF THE INVENTION

According to one aspect of the present invention, an information processing apparatus includes a storage to store document data; a document-category identifying unit that identifies a document category indicating a use of a document based on a content of the document data; a display unit that displays the document data; a input receiving unit that receives an input designation to at least part of the document data displayed by the display unit; a form identifying unit that identifies a designation form of the input designation; a range specifying unit that specifies an applicable range of the input designation; and a processing unit that processes the applicable range based on the designation form and the document category.

According to another aspect of the present invention, an information processing method includes storing a document data in a storage; identifying a document category indicating a use of a document based on a content of the document data; displaying the document data by the display unit; receiving an input of a designation to at least part of the document data displayed by the display unit; identifying a designation form of the input designation; specifying an applicable range of the input designation; and processing the applicable range based on the designation form and the document category.

A computer program product according to still another aspect of the present invention causes a computer to perform the method according to the present invention.

### BRIEF DESCRIPTION OF THE DRAWINGS

Fig. 1 is a functional block diagram of a contents browsing apparatus according to a first embodiment of the present invention;
Fig. 2 is a schematic view for explaining an example of input document data received by a document input unit shown in Fig. 1;
Fig. 3 is a schematic view for explaining an example of a data structure of a word-attribution association dictionary shown in Fig. 1;
Fig. 4 is a schematic view for explaining an example of a data structure in a pattern storage unit shown in Fig. 1;
Fig. 5 is a schematic view for explaining an example of input document data in which an attribution adding unit shown in Fig. 1 embeds tags indicating word attributions;
Fig. 6 is a schematic view for explaining an example of input document data in which a document-attribution adding unit shown in Fig. 1 embeds tags indicating document attributions;
Fig. 7 is a schematic view for explaining an example of a data structure in a document-type identifying-knowledge storage unit shown in Fig. 1;
Fig. 8 is a schematic view for explaining an example of input document data in which a document type identified by a document-type identifying unit shown in Fig. 1 is embedded;
Fig. 9 is a schematic view for explaining an example of a screen on which a document type and input document data are displayed by a document-type display-processing unit shown in Fig. 1;
Fig. 10 is a schematic view for explaining an example of a menu screen displayed when a user presses a setting button shown in Fig. 9;
Fig. 11 is a schematic view for explaining an example of a data structure of intention identifying-knowledge information present in an intention identifying-knowledge storage unit shown in Fig. 1;
Fig. 12 is a schematic view for explaining an example of a context menu displayed by an intention display-processing unit and a word-attribution display-processing unit shown in Fig. 1;
Fig. 13 is a schematic view for explaining another example of the context menu displayed by the intention display-processing unit and the word-attribution display-processing unit;
Fig. 14 is a schematic view for explaining an example when an action deciding unit shown in Fig. 1 presents a plurality of action knowledge information to a user;
Fig. 15A is a schematic view for explaining a first example of a data structure in an action storage unit shown in Fig. 1;
Fig. 15B is a schematic view for explaining a second example of a data structure in the action storage unit;
Fig. 16A is a schematic view for explaining an example of a data structure present in a history storage unit shown in Fig. 1;
Fig. 16B is a schematic view for explaining an example of data present in the history storage unit added with viewing information;
Fig. 17 is a schematic view for explaining an example of a display screen on which a bookmark management unit shown in Fig. 1 presents a bookmark information;
Fig. 18 is a schematic view for explaining a data structure of bookmark information present in a bookmark storage unit shown in Fig. 1;
Fig. 19 is a schematic view for explaining an example of the bookmark information after one record is registered additionally to the bookmark information shown in Fig. 18;
Fig. 20 is a schematic view for explaining an example of a display screen on which the bookmark management unit presents the bookmark information after the bookmark information shown in Fig. 19 is added;
Fig. 21 is a schematic view for explaining an screen example for editing a bookmark;
Fig. 22 is a flowchart of a process from adding a document type to input document data received by the contents browsing apparatus until storing the input document data into a document-data storage unit shown in Fig. 1;
Fig. 23 is a flowchart of a process of adding a word attribution to a word included in input document data performed by the attribution adding unit;
Fig. 24A is a flowchart of a first process of adding a document structural attribution indicating a document structure of input document data performed by the document-attribution adding unit;
Fig. 24B is a flowchart of a second process of adding the document structural attribution performed by the document-attribution adding unit;
Fig. 25A is a flowchart of a process of identifying a document type of input document data performed by the document-type identifying unit;
Fig. 25B is a flowchart of the process of identifying the document type of the input document data performed by the document-type identifying unit;
Fig. 26 is a flowchart of a process performed by the contents browsing apparatus from receiving an annotation until executing of an action to the input document data;
Fig. 27 is a schematic view for explaining an example of a screen when a user underlines a word "Tozai-Denki" included in presented information displayed by a display-processing unit shown in Fig. 1;
Fig. 28 is a schematic view for explaining an example of a screen when a user encloses a portion "Event Venue: Tozai-Denki (omitted) Friday, April 7, 2006" included in presented information displayed by the display-processing unit;
Fig. 29 is a flowchart of a process performed by an annotation recognition unit shown in Fig. 1 from receiving input of an annotation until identifying the annotation;
Fig. 30A is a schematic view for explaining an example of annotation information detected by an annotation-input receiving unit shown in Fig. 1;
Fig. 30B is a schematic view for explaining another example of annotation information detected by the annotation-input receiving unit;
Fig. 31 is a schematic view for explaining an example of an identification result of annotation information obtained by the annotation recognition unit when the annotation shown in Fig. 27 is written;
Fig. 32 is a flowchart of a process of intention identification performed by an intention extracting unit shown in Fig. 1;
Fig. 33 is a schematic view for explaining an example of intention identifying-knowledge information extracted by the intention extracting unit extracts based on a word attribution "company name" and an annotation "underline" as a search key;
Fig. 34 is a schematic view for explaining an example of intention identifying-knowledge information when the intention extracting unit rearranges the intention identifying-knowledge information shown in Fig. 33;
Fig. 35 is a schematic view for explaining an example of intention identifying-knowledge information extracted by the intention extracting unit when an input annotation is an enclosure;
Fig. 36 is a flowchart of a process according to which an executing unit shown in Fig. 1 executes processing corresponding to a selection of action knowledge information received from a user;
Fig. 37 is a schematic view for explaining an example of a screen when "VoIP" that is attached with no word attribution in input document data is underlined;
Fig. 38 is a schematic view for explaining an example of a screen for revising a document type when "VoIP" that is attached with no word attribution in the input document data is underlined;
Fig. 39 is a schematic view for explaining an example of a screen on which input document data different from Fig. 9 is displayed;
Fig. 40 is a schematic view for explaining an example of a user interface that is displayed when the document type, the word attribution, and the intention of a user are all unknown;
Fig. 41 is a schematic view for explaining an example of a window in which action knowledge information created by the action deciding unit is presented to a user;
Fig. 42 is a schematic view for explaining an example of a window for receiving registration of information, such as a site name, to the action knowledge information created by the action deciding unit;
Fig. 43 is a schematic view for explaining an example of the action knowledge information added as shown in Fig. 42;
Fig. 44 is a schematic view for explaining an example of a context menu displayed by the action deciding unit when new action knowledge information is registered as shown in Figs 42 and 43;
Fig. 45 is a schematic view for explaining a screen of a search method list presented by an intention identifying-knowledge revising unit shown in Fig. 1 when an item "edit search method" on a setting menu is selected;
Fig. 46 is a schematic view for explaining an example of a window to be displayed when a user selects intention identifying-knowledge information shown in Fig. 45 and presses a change button;
Fig. 47 is a schematic view for explaining an example of a window for setting displaying order of intention identifying-knowledge information and action knowledge information;
Fig. 48 is a schematic view for explaining an example of a screen for setting environment as an initial setting of the contents browsing apparatus;
Fig. 49 is a schematic view for explaining an example of a screen for customizing as the initial setting of the contents browsing apparatus;
Fig. 50 is a schematic view for explaining an example of a window to be displayed when a search button shown in Fig. 37 is pressed;
Fig. 51 is a schematic view for explaining an example of a data structure of intention identifying-knowledge information present in the intention identifying-knowledge storage unit of the contents browsing apparatus according to a first modification;

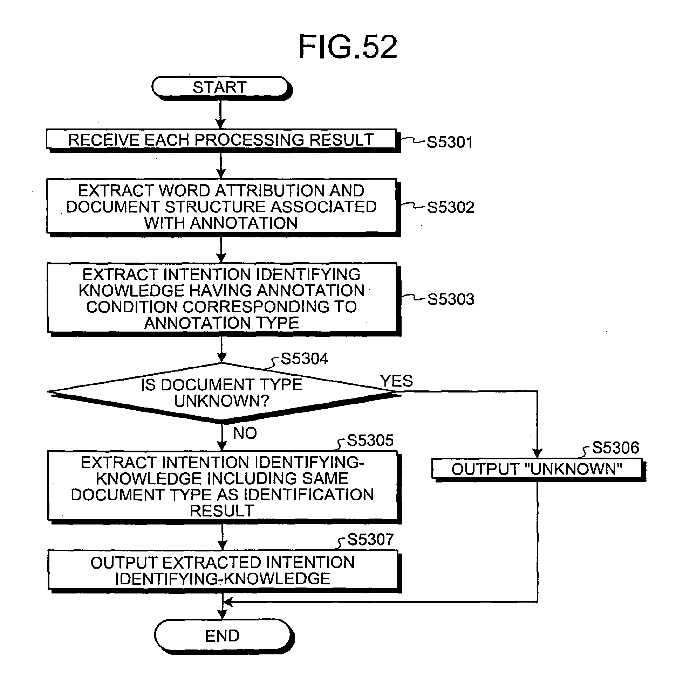

Fig. 52 is a flowchart of a process of intention identification performed by the intention extracting unit according to the first modification;
Fig. 53 is a schematic view for explaining an example of a window displayed by the intention display-processing unit; and
Fig. 54 is a schematic view for explaining hardware configuration of the contents browsing apparatus.

### DETAILED DESCRIPTION OF THE INVENTION

Exemplary embodiments of the present invention are explained below in detail with reference to the accompanying drawings.

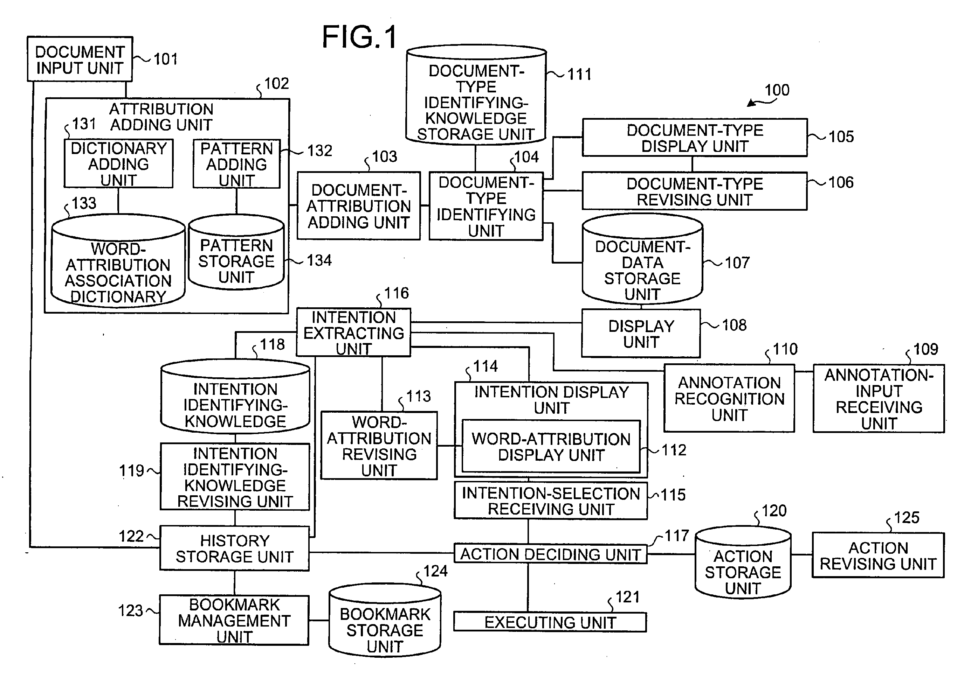

As shown in Fig. 1, a contents browsing apparatus 100 according to a first embodiment includes a document input unit 101, an attribution adding unit 102, a document-attribution adding unit 103, a document-type identifying unit 104, a document-type display unit 105, a document-type revising unit 106, a document-data storage unit 107, a display-processing unit 108, an annotation-input receiving unit 109, an annotation recognition unit 110, a document-type identifying-knowledge storage unit 111, a word-attribution display-processing unit 112, a word-attribution revising unit 113, an intention display-processing unit 114, a intention-selection receiving unit 115, an intention extracting unit 116, an action deciding unit 117, an intention identifying-knowledge storage unit 118, an intention identifying-knowledge revising unit 119, an action storage unit 120, an executing unit 121, a history storage unit 122, a bookmark management unit 123, a bookmark storage unit 124, and an action revising unit 125.

The contents browsing apparatus 100 according to the first embodiment of the present invention is explained below about an example where Internet contents can be browsed with the apparatus. For example, the contents browsing apparatus 100 can display contents on the Internet described in hypertext markup language (HTML).

The contents browsing apparatus 100 can install an application software for referring to contents into a personal computer (PC). In addition, the PC used by the contents browsing apparatus 100 can be in any form, for example, a notebook computer. Moreover, the contents browsing apparatus 100 can be fabricated by using another hardware device, for example, a tablet PC, or a personal digital assistance (PDA).

Furthermore, the contents browsing apparatus 100 includes a not-shown liquid crystal display (LCD). A transparent tablet is superposed on a screen of the LCD. Accordingly, a user can input coordinates onto the displayed screen with a pointing device, such as an electronic pen. In other words, while displaying input document data on the LCD, the contents browsing apparatus 100 can receive input of an annotation to the input document data as the user inputs the annotation onto the LCD with pen.

The contents browsing apparatus 100 includes a tablet which allows a user to input with pen, and an annotation function. Accordingly, the contents browsing apparatus 100 can executes actions for displayed documents in accordance with an annotation specified by input with pen.

The annotation function is a function of writing by input with pen onto data, such as document data displayed by the contents browsing apparatus 100. Any content can be written, for example, underline, enclosure, character, character string, symbol, and symbol string.

Furthermore, the contents browsing apparatus 100 can include the functional configuration shown in Fig. 1 in a form of existing application software, for example, a Web browser. The contents browsing apparatus 100 can also be configured to achieve each function shown in Fig. 1 by incorporating a plug-in software or an add-on software into a Web browser.

Accordingly, when a user boots up the contents browsing apparatus 100, it can receive operation, such as displaying a Web page or a bookmark, and tracing a link from the displayed Web page, similarly to existing Web browser application software. As a result of such operations, the contents browsing apparatus 100 can receive input of document data, and display the document data.

The document input unit 101 receives input of document data. The document data can be in various formats, such as document data in hypertext markup language (HTML) format, document data in extensible markup language (XML) format, and document data converted from paper document to electronic data by a known optical character recognition (OCR) technology. The document data are input into the contents browsing apparatus 100 through various routes, such as from a recording medium, or via a network. The received input document data is output to the attribution adding unit 102 and the document-attribution adding unit 103.

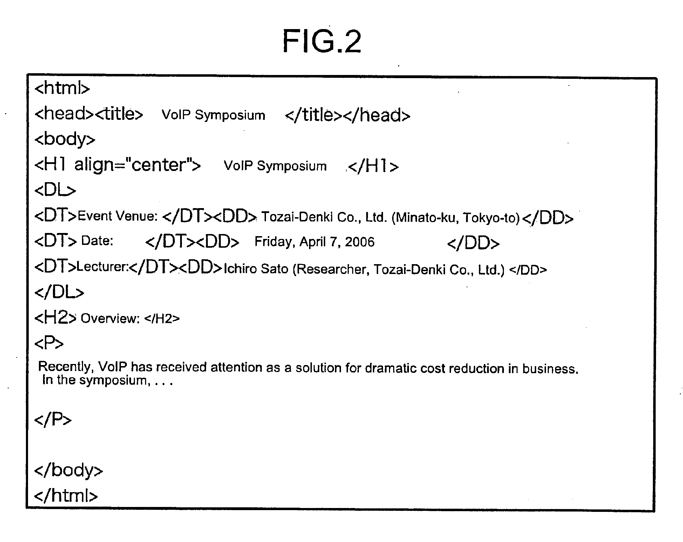

As shown in Fig. 2, the first embodiment is explained below in a case where document data in HTML format is used.

Returning to Fig. 1, the attribution adding unit 102 includes a dictionary adding unit 131, a pattern adding unit 132, a word-attribution association dictionary 133, and a pattern storage unit 134. The attribution adding unit 102 determines whether a word included in the input document data is registered in word-attribution association dictionary information, and adds an identified word attribution to a portion at which the word is written in the input document data. The word-attribution association dictionary information is dictionary information in which a word is associated with its word attribution.

The word attribution is an attribution that indicates a meaning of the word. The attribution adding unit 102 embeds the word attribution in associated manner into the word included in the input document data. Thus, when reading the document data, a device, such as the contents browsing apparatus 100, can understand the meaning of the written word.

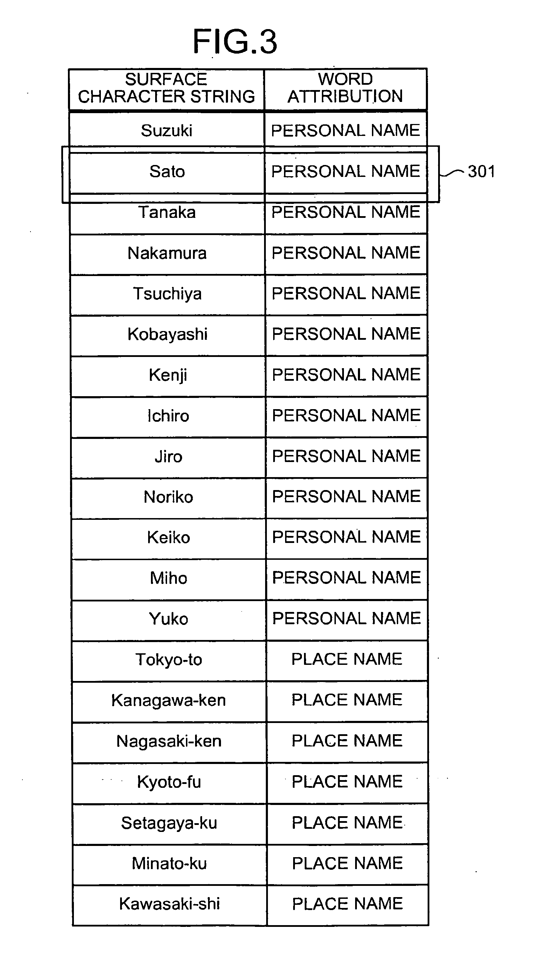

As shown in Fig. 3, the word-attribution association dictionary 133 stores therein in associated manner a character string that expresses the word, and a word attribution. For example, in a record 301 in the word-attribution association dictionary 133 shown in Fig. 3, a character string "Sato" is associated with a word attribution "personal name".

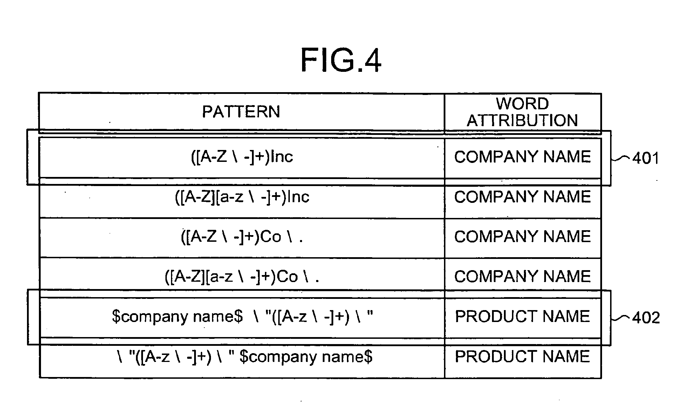

As shown in Fig. 4, the pattern storage unit 134 stores therein in associated manner a pattern for identifying a character string and a word attribution. For example, in a record 401 in the pattern storage unit 134 shown in Fig. 4, a pattern "([A-Z\-]+) Inc" is associated with a word attribution "company name". In another example, in a record 402 in the pattern storage unit 134, a pattern "$company name$ \"([A-Z\-]+)\"" is associated with a word attribution "product name".

In the example shown in Fig. 4, the patterns are described in formal expressions used in the practical extraction and report (Perl) language. In the patterns, portions each to be added with a word attribution are specified with small brackets. The record 401 indicates that a character string that has one or more continuous characters directly before a character string "Inc." is associated with the word attribution "company name".

The record 402 indicates that a character string enclosed with double quotation marks following another character string attached with the word attribution "company name" is associated with the word attribution "product name".

When a character string written in the input document data corresponds to conditions registered in the pattern storage unit 134, the pattern adding unit 132 adds word attribution information associated with the character string by the pattern storage unit 134 to the character string.

For example, if input document data includes a character string "<SPAN class="company name"> Tozai Inc </SPAN>"GB21"", the pattern adding unit 132 determines that it corresponds to the pattern of the record 402 in the pattern storage unit 134. In this case, the pattern adding unit 132 determines that "GB21"is a character string to be given with word attribution. Word attribution associated with the pattern is "product name", so that the pattern adding unit 132 inserts a tag <SPAN class="product name"> before the character string "GB2", and inserts a tag </SPAN> after the character string "GB 21".

In this manner, word attributions to be identified by the attribution adding unit 102 and the pattern adding unit 132 are predetermined. Although "personal name", "company name", "product name", and "place name" are shown as examples in the first embodiment, any other attribution can be predetermined.

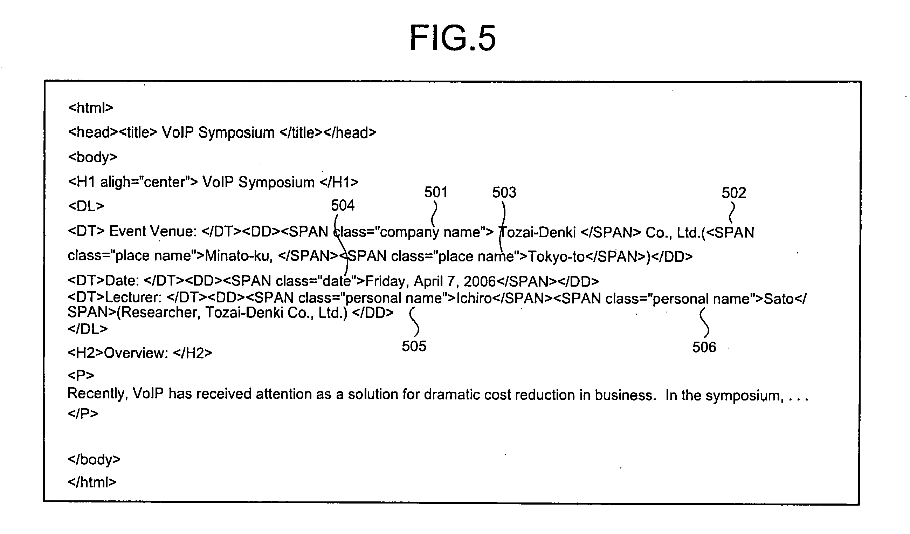

As shown in Fig. 5, a tag <SPAN> is used for embedding a word attribution, and the word attribution is defined at "class" in the tag. Tags 501 to 506 are given by the attribution adding unit 102. Because of the tags, the contents browsing apparatus 100 can recognizes meanings of character strings enclosed with the tags. A detailed process performed by the attribution adding unit 102 will be described later.

The document-attribution adding unit 103 identifies document structural elements included in the input document data, such as a headline, itemization, a body, a header, and a footer, and adds attribution information that indicates a document structure into the input document data.

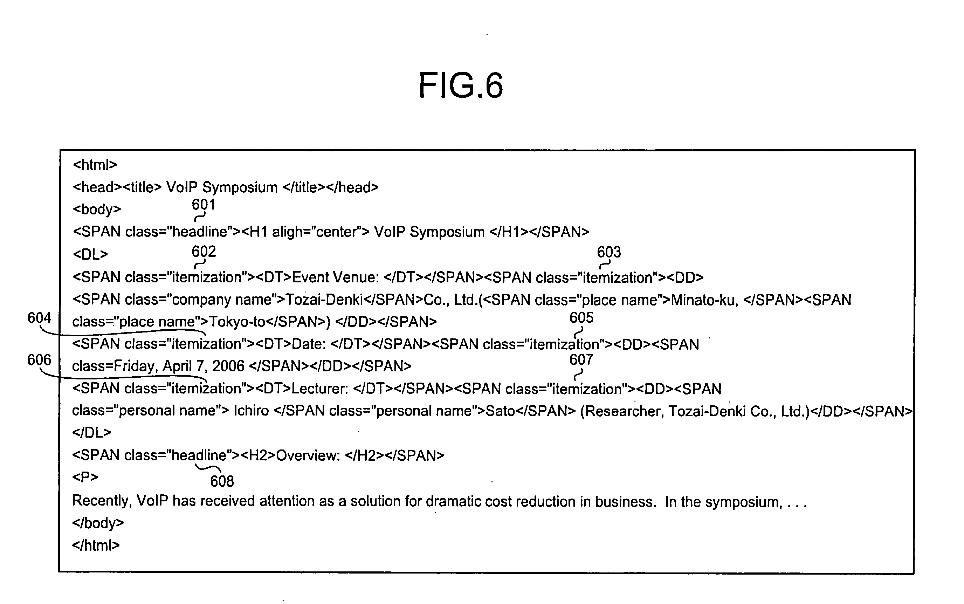

As shown in Fig. 6, a tag <SPAN> is used for embedding the document structural attribution, and the document structural attribution is defined at "class" in the tag. Tags 601 to 608 are embedded by the document-attribution adding unit 103. By adding such tags, the contents browsing apparatus 100 can recognizes a document structure of the input document data. A detailed process performed by the document-attribution adding unit 103 will be described later.

The document-type identifying unit 104 identifies a document type of the input document data from among the predetermined document types based on the word attribution information added by the attribution adding unit 102 and the document structural attribution information added by the document-attribution adding unit 103. The document type indicates a use of the input document data, for example, new article, think piece, product catalog, or sales information. The document-type identifying unit 104 uses the document-type identifying-knowledge storage unit 111 when identifying the document type of the input document data. After identifying the document type, the document-type identifying unit 104 then adds the document type to the input document data.

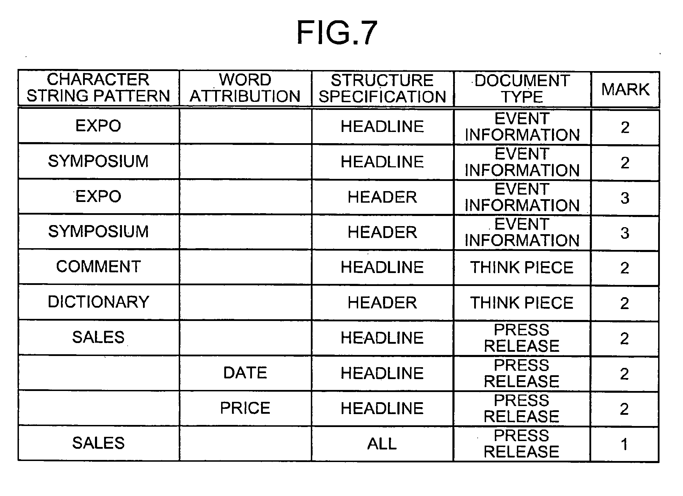

As shown in Fig. 7, the document-type identifying-knowledge storage unit 111 stores therein in associated manner a character string pattern, a word attribution, a structure specification, a document type, and a mark. The document-type identifying unit 104 identifies the document type by evaluating an attribution embedded in a word or a tag included in the input document data into a mark based on the document-type identifying-knowledge storage unit 111. A detailed process will be described later.

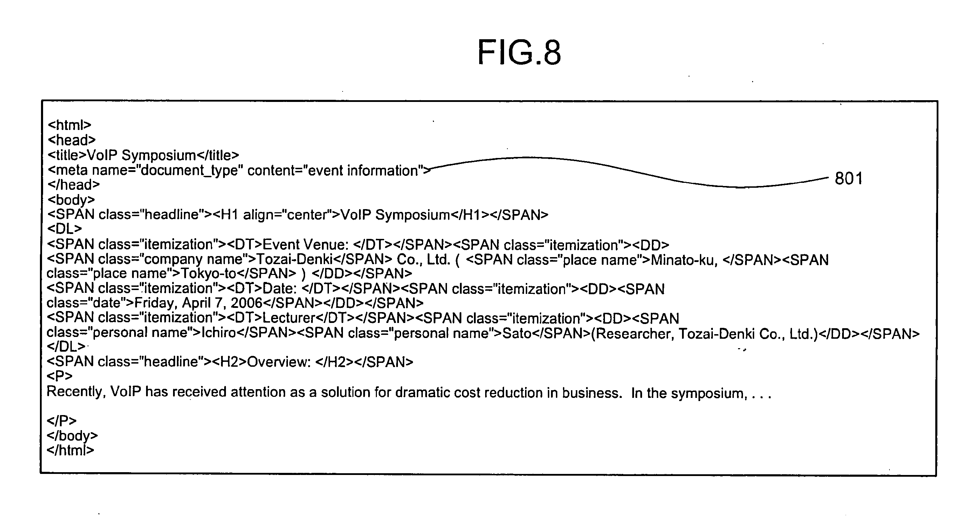

In the input document data shown in Fig. 8, a metatag 801 includes a document type. In other words, it indicates that the input document data shown in Fig. 8 is identified as event information.

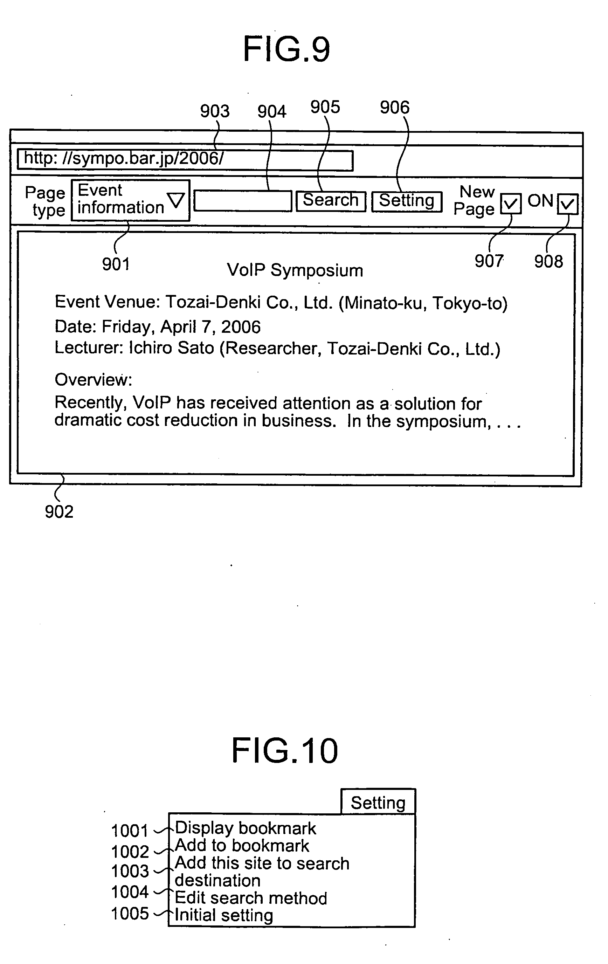

The document-type display unit 105 displays the identified document type together with the input document data. In a screen example shown in Fig. 9, the document type is displayed as a page type. The page type is shown in a pull-down menu 901. By using the pull-down menu 901, the user can select an appropriate page type from the menu.

In addition, the user can input an annotation with pen onto a display area 902 on the displayed screen in Fig. 9. The processing in this case is similar to processing performed by the display-processing unit 108, which will be described later, therefore, explanation for it is omitted here.

The document-type revising unit 106 revises the document type identified by the document-type identifying unit 104. For example, when the screen shown in Fig. 9 is displayed, if the user determines that the document type displayed in the pull-down menu 901 is wrong, the user can select another page type (document type) from the pull-down menu 901. For example, if the user taps at the pull-down menu 901 with pen, a list of page types (document types) are displayed as options. The user then selects a document type that the user deems appropriate from the options, accordingly, the document-type revising unit 106 revises the document type to be added into the input document data to the selected document type. Consequently, if the document type identified by the document-type identifying unit 104 is wrong, it can be revised to an appropriate document type. Subsequent processing is to be performed by using the revised document type.

After the processing is finished, the document-type identifying unit 104 performs processing to write the input document data in which the document type is embedded into the document-data storage unit 107.

The document-data storage unit 107 stores therein the input document data in which the word attribution, the document structural attribution, and the document type are embedded according to the processing described above. In addition, the document-data storage unit 107 stores therein the input document data temporarily for the contents browsing apparatus 100 to display it, for example, a random access memory (RAM) is used as the storage unit.

The display-processing unit 108 displays the input document data in which the word attribution, the document structural attribution, and the document type are embedded. A screen example is the same as that in Fig. 9. When the display-processing unit 108 displays the input document data, input of an annotation or other designations can be received. Thus, the user can view the input document data.

The pull-down menu 901 displays the document type present in the input document data as the page type. The display area 902 displays the input document data, and receives input of an annotation. In addition, the display area 902 can change the page type similarly to the case explained above.

An area 903 displays an address of the input document data that is being displayed currently. In an area 904, which is a blank in Fig. 9, a character string, such as a word in the input document data specified by the input annotation, is to be displayed. A search button 905 is for selecting an action to an character string displayed in the area 904. Details will be described later.

A setting button 906 is for calling a window to carry out the initial setting of the contents browsing apparatus 100.

When the user presses the setting button 906, the user selects an item from items displayed on a menu screen shown in Fig. 10, and then various processing can be performed. Details will be described later.

Returning to Fig. 9, a check box 907 is for instructing either displaying in the window currently displayed or displaying in another window when an input document data different from the input document data displayed in the display area 902 is to be displayed.

For example, when performing a search, if the user wants the input document data currently displayed to remain, and a search result to be displayed in a new window, the user marks the check box 907.

A check box 908 is for instructing whether input of an annotation is to be received to the input document data displayed in the display area 902.

For example, if operation onto ordinary HTML or script embedded in the input document data conflicts with input of an annotation, the user deletes the mark in the check box 908, and makes input of annotation ineffective. Consequently, only the operation onto ordinary HTML or script embedded in the input document data can be accurately recognized.

Returning to Fig. 1, the annotation-input receiving unit 109 receives input of an annotation performed by the user with operation of a pen or another inter input interface to the input document data displayed by the display-processing unit 108. The annotation is a trace a combination of traces that is drawn onto the display screen, which can be, for example, an underline, an enclosure, a character, a character string, a symbol, and a symbol string.

The annotation recognition unit 110 identifies the type of an annotation received from the annotation-input receiving unit 109, and recognizes an applicable range to which the annotation is applied in the displayed input document data. In other words, the annotation recognition unit 110 is equivalent to a unit that includes a form identifying unit that identifies the type (form) of an annotation, and a range specifying unit that specifies an applicable range of the annotation.

The intention extracting unit 116 extracts an intention of the user who is operating the contents browsing apparatus 100, based on at least one of the following: a recognition result obtained by the annotation recognition unit 110 (for example, a type of the annotation and an applicable range for the annotation); word attributions, document structural attributions, or the document type included in the displayed input document data; and intention identifying-knowledge information prestored in the intention identifying-knowledge storage unit 118.

If a word attribution is added to a word included in the applicable range in the recognition result of the annotation, the intention extracting unit 116 uses the word attribution as a condition for identifying the intention of the user. In addition, the intention extracting unit 116 can use a document structural attribution added to the input document data as a condition for identifying the intention of the user, although the use of the document structural attribution is different from the first embodiment.

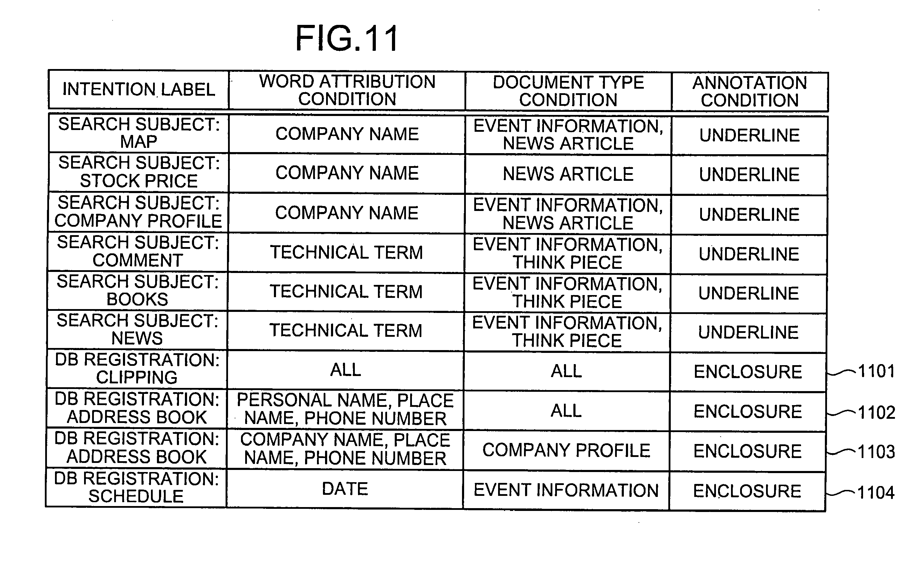

As shown in Fig. 11, in the intention identifying-knowledge information, an intention label, a word attribution condition, a document type condition, and an annotation condition are associated with each other. As shown in Fig. 11, the intention identifying-knowledge storage unit 118 prestores therein categories of intentions of the user. The categories of intentions of the user can be, for example, an intention to clip information included in the applicable range of the annotation, an intention to view map information based on information included in the applicable range of the annotation, an intention to search for information about reputation for a product based on information included in the applicable range of the annotation, and the like.

Furthermore, by referring to the intention identifying-knowledge information, the intention extracting unit 116 can extract an intention label that indicates an intention of the user, based on the recognition result of the annotation, the document type of the input document data, and the word attribution of the word included in the applicable range. A detailed process will be described later.

If a plurality of intentions of the user is extracted by the intention extracting unit 116, the intention display-processing unit 114 displays the intentions of the user onto a newly created context menu. Accordingly, the user can confirm an identification result of the intentions, perform operation on the menu as required, and select an appropriate intention.

Moreover, the intention display-processing unit 114 displays the intention label extracted from the intention identifying-knowledge storage unit 118 as the intention of the user. Thus, when a plurality of intentions of the user is extracted, an appropriate intention can be selected.

When the intention display-processing unit 114 displays the intention of the user, the word-attribution display-processing unit 112 displays word attributions of a word included in the applicable range of the annotation onto the same context menu.

If the user selects a word attribution from the context menu displayed by the word-attribution display-processing unit 112, the word-attribution revising unit 113 revises the word attribution of the word included in the applicable range of the annotation in the input document data to the selected word attribution.

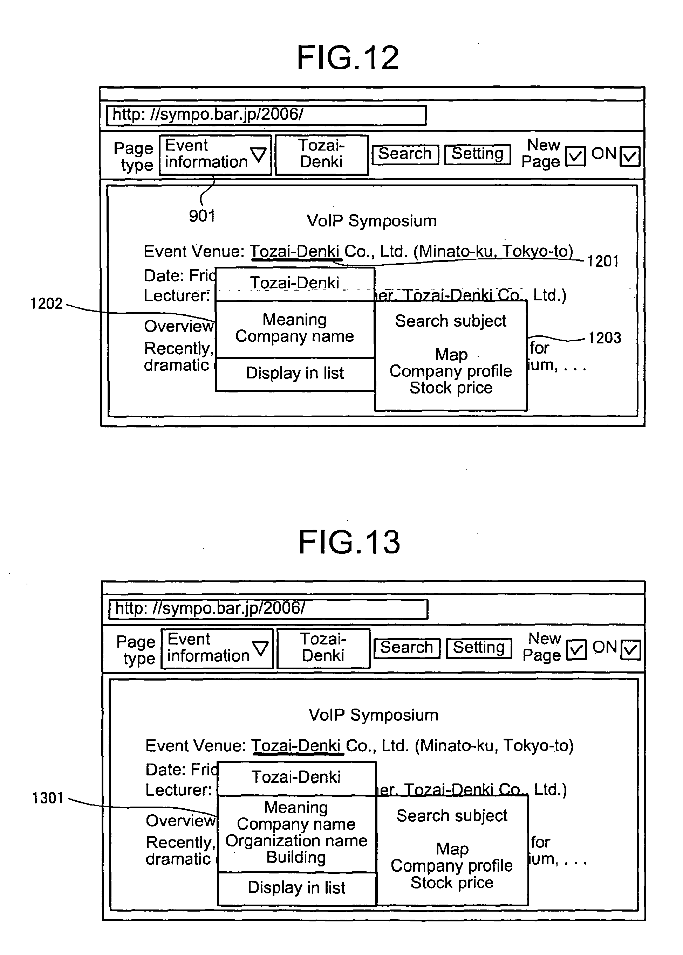

Fig. 12 depicts an example of the context menu when the user input an annotation 1201. The word-attribution display-processing unit 112 displays in a window 1202 the word attribution "company name" added to a word "Tozai-Denki" included in the applicable range of the annotation. Accordingly, it can be confirmed that the word attribution is used as a condition for intention extraction. Moreover, the intention display-processing unit 114 displays the extracted intention in a window 1203. In other words, the example shown in Fig. 12 presents that an intention of the user is to perform a search for a map, a stock price, company profiles, and the like.

The example is explained above in a case where the word attribution corresponding to Tozai-Denki marked with the annotation is only "company name". However, there are some cases where a plurality of attributions is added to a word.

As shown in another example of the context menu in Fig. 13, if the word-attribution display-processing unit 112 acquires a plurality of word attributions based on the word included in the applicable range, the word-attribution display-processing unit 112 displays the acquired word attributions in a window 1301.

If the user then selects any one of the word attributions shown in Fig. 13, the word-attribution revising unit 113 make a revision so that the selected word attribution is to be used for extracting the intention. Accordingly, the intention extracting unit 116 determines again the intention of the user by using the word attributions. Thus, an intention label determined as an appropriate intention of the user is displayed.

Returning to Fig. 1, the intention-selection receiving unit 115 receives a selection of an intention that the user actually desires to perform processing from among the displayed intentions of the user. When the context menu shown in Fig. 12 is displayed, the intention-selection receiving unit 115 receives a selection of a search subject that the user actually desires to search for from among search subjects displayed in the window 1203, namely, map, company profile, and stock price. Thus, processing can be performed based on an appropriate intention of the user.

The action deciding unit 117 selects an action corresponding to the intention label selected by the intention-selection receiving unit 115 from among the intention labels of the user identified by the intention extracting unit 116.

Actions to be selected by the action deciding unit 117 are predetermined. Information in which a executing method of a specific action corresponding to the intention of the user is referred to as action knowledge information. An example of the action knowledge information is a script program incorporated to perform processing corresponding to the intention of the user. The action knowledge information is present in the action storage unit 120, which will be described later. The action deciding unit 117 can execute an action corresponding to the user's intention information by reading the script program.

Moreover, if a plurality of action knowledge information correspond to the user's intention information, the action deciding unit 117 can receive a selection of the action knowledge information from the user by presenting the plurality of action knowledge information to the user.

For example, when the action deciding unit 117 receives a selection that the user has an intention to view map information based on a word included in the applicable range specified with the annotation, if a plurality of services for providing map information (action knowledge information) are available, the action deciding unit 117 presents the services to the user.

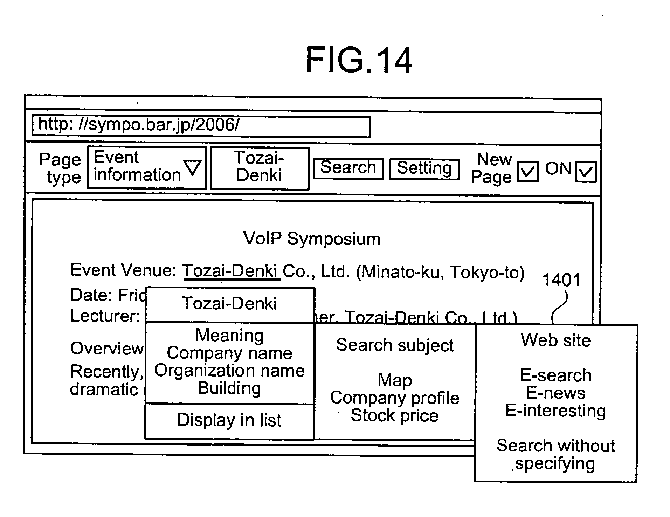

As shown in Fig. 14, when the user inputs an annotation, such as an underline, onto the displayed input document data, the intention display-processing unit 114 displays an context menu. The context menu presents action knowledge information to the user as a context menu 1401.

As shown in the context menu 1401, the action deciding unit 117 presents the action knowledge information to the user. The presentation of the action knowledge information facilitates a selection of an appropriate action desired by the user. Thus, the contents browsing apparatus 100 makes interaction with the user, and executes an action based on a content of the interaction.

In the example of the context menu shown in Fig. 14, similarly to Fig. 13, the contents browsing apparatus 100 can also lead the user to select a word attribution at first. The contents browsing apparatus 100 then leads the user to select a search subject corresponding to the selected word attribution (intention of the user). After selecting the search subject, the action deciding unit 117 leads the user to select an action of selecting a Web site specifically used for searching for information from Web sites applicable to the search subject.

In this way, when displaying a context menu to the user, the word-attribution display-processing unit 112, the intention display-processing unit 114, and the action deciding unit 117 do not need to be separated as individual interfaces.

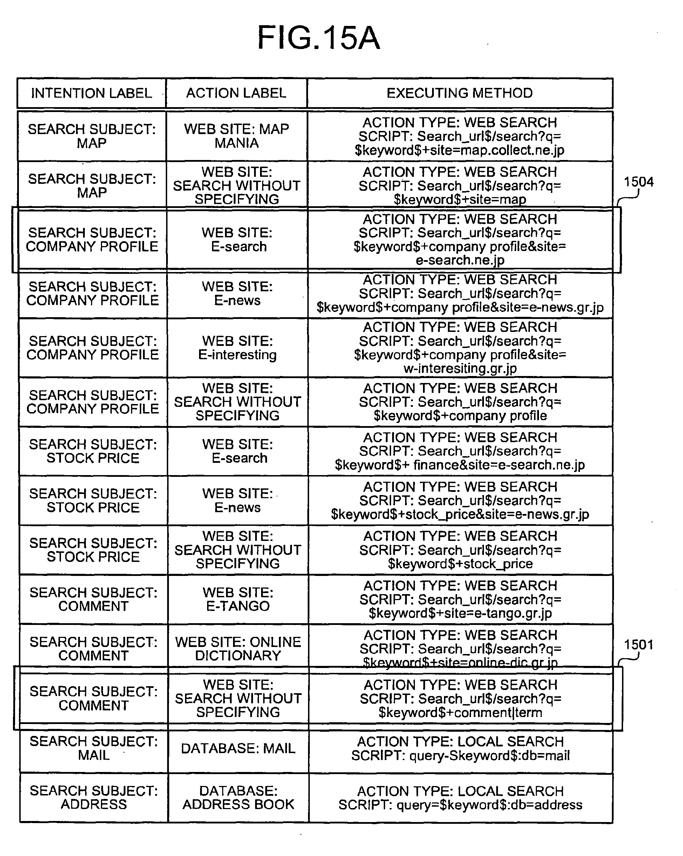

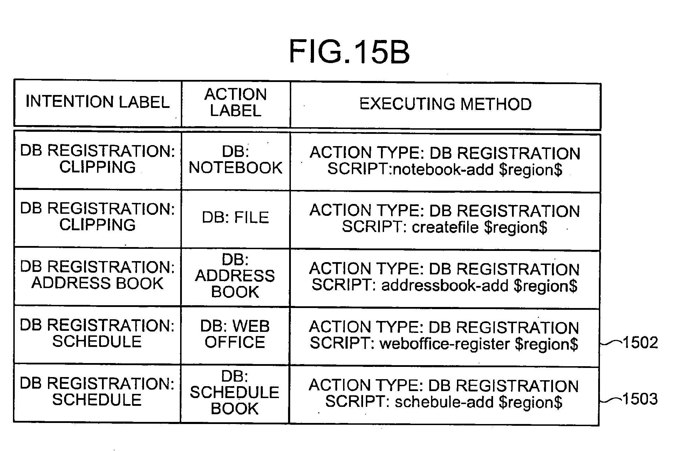

As shown in Figs. 15A and 15B, the action storage unit 120 includes a table structure in which an intention label, an action label, and an executing method are associated with each other. The action deciding unit 117 can specify an action by performing a search by an intention label as a search key. In the example shown in Fig. 14, the action deciding unit 117 displays action labels as action knowledge information.

Returning to Fig. 1, the executing unit 121 executes an action selected by the action deciding unit 117. In the first embodiment, the executing unit 121 performs processing in accordance with an executing method associated with the selected action in the action storage unit 120.

The intention identifying-knowledge revising unit 119 makes a revision, such as change, deletion, or addition of the intention identifying-knowledge information present in the intention identifying-knowledge storage unit 118 by using information, such as history information present in the history storage unit 122, which will be described later.

The history storage unit 122 stores therein information about processing performed when the contents browsing apparatus 100 refers to contents as history information, for example, reference information about reference to input document data received by the document input unit 101, intention information about an intention selected by the user via the intention-selection receiving unit 115, action knowledge information about an action selected by the user via the action deciding unit 117.

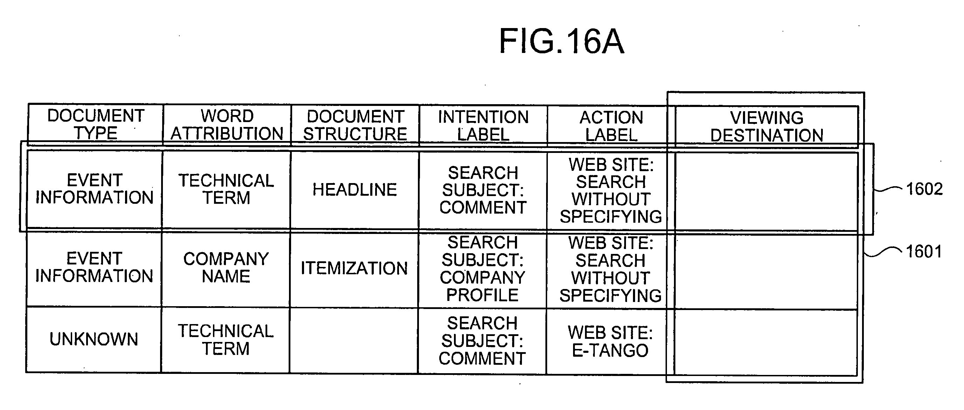

As shown in Fig. 16A, the history storage unit 122 stores therein in associated manner a document type, a word attribution, a document structure, an intention label, an action label, and a viewing destination. In this way, the document type of displayed input document data, the word attribution corresponding to a portion of HTML marked with an annotation by the user, the document structural attribution, the intention label selected by the user, and the action label selected by the user are stored in the history storage unit 122 in associated manner.

For example, if the action type of an executed action is Web search, after search processing according to the action, Web sites displayed as a search result are stored in a field 1601 in the history storage unit 122 one after another. The number of viewing destinations acceptable to be recorded can be predetermined. For example, the number of viewing destinations acceptable to be recorded can be three.

Returning to Fig. 1, the bookmark management unit 123 manages bookmarks based on the history information present in the history storage unit 122. Moreover, the bookmark management unit 123 performs processing of addition, deletion, or change onto reference information accumulated in the bookmark storage unit 124, which will be described later, and a tree structure for sorting out the reference information.

Furthermore, if receiving a selection of an item "display bookmark" 1001 from the menu shown in Fig. 10, the bookmark management unit 123 reads out bookmarks present in the bookmark storage unit 124, and present them to the user.

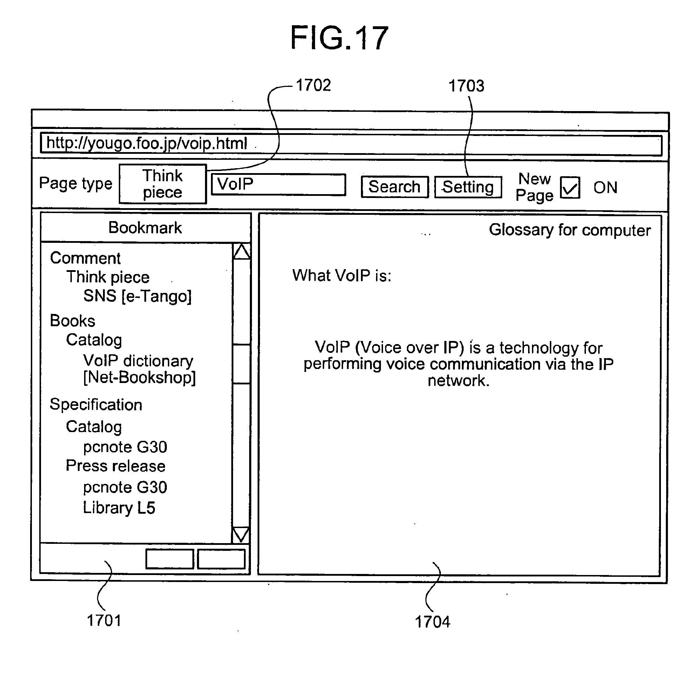

Bookmark information is presented in an area 1701 on the display screen shown in Fig. 17.

An area 1704 displays input document data, for example, data presented based on an extraction result. Moreover, if a certain item is selected from the bookmark, input document data corresponding to the selected item is displayed in the area 1704. A page type 1702 displays the document type identified for the input document data displayed in the area 1704. The document type is displayed via an interface of the document-type display unit 105.

In addition, when the user presses a setting button 1703, the menu shown in Fig. 10 is displayed. If an item "add to bookmark" 1002 is selected from the menu, the bookmark management unit 123 performs processing to register the input document data displayed in the area 1704 into the bookmark storage unit 124 as a bookmark.

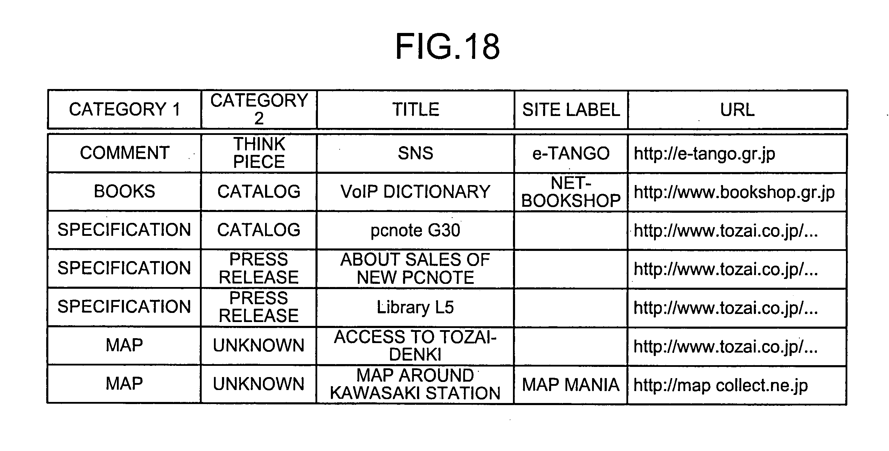

In the first embodiment, the bookmark storage unit 124 stores therein bookmarks in a tree structure. As shown in Fig. 18, the bookmark information includes category 1, category 2, title, site label, and URL in associated manner.

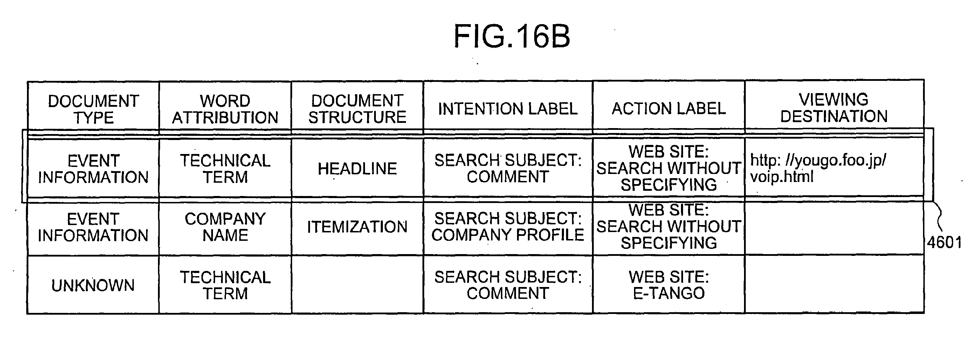

A procedure of registering a bookmark is explained below. For example, the history storage unit 122 stores therein a record 4601 shown in Fig. 16B as history information. The bookmark management unit 123 substitutes "comment" indicating the search subject from the intention label "search subject: comment" into category 1 in the bookmark information, and the document type "think piece" of the displayed input document data into category 2 in the bookmark information.

Moreover, the bookmark management unit 123 substitutes the title of the input document data shown in Fig. 17 into the title in the bookmark information. Furthermore, the bookmark management unit 123 substitutes reference information indicating an acquisition source of the input document data shown in Fig. 17 into URL in the bookmark information.

Moreover, if the action label in the history information shown in Fig. 16B includes information for specifying a certain Web site, the bookmark management unit 123 substitutes the information about the Web site into the site label in the bookmark information. In addition, when displaying the bookmark information, the user can recognize a search destination by displaying the site label. In the case of the history information shown in the record 4601, the action label is "web site: search without specifying", so that the site label in the bookmark information is blank.

The bookmark storage unit 124 stores therein reference information of Internet contents by the user, for example, the reference information being sorted in a tree structure style. By accumulating reference information in this way, the user can easily view Internet contents.

By using category 1 and category 2 in the bookmark information, the bookmarks can be categorized in the tree structure. The site label is displayed, for example, inside brackets in a bookmark shown in Fig. 17 as a title indicating the document.

In this way, when adding a bookmark, the bookmark management unit 123 registers relevant information as a node in the tree structure that presents the bookmark, by using the information present in the history storage unit 122, and the document type identified with the input document data bookmark by the document-type identifying unit 104.

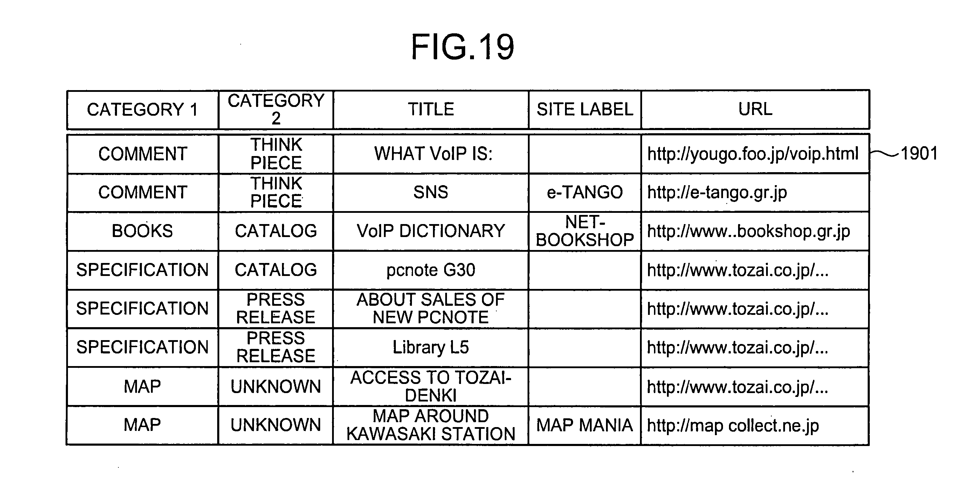

A record 1901 shown in Fig. 19 presents bookmark information about the input document data displayed in the area 1704 in Fig. 17. Thus, every time when a bookmark is registered, bookmark information is added.

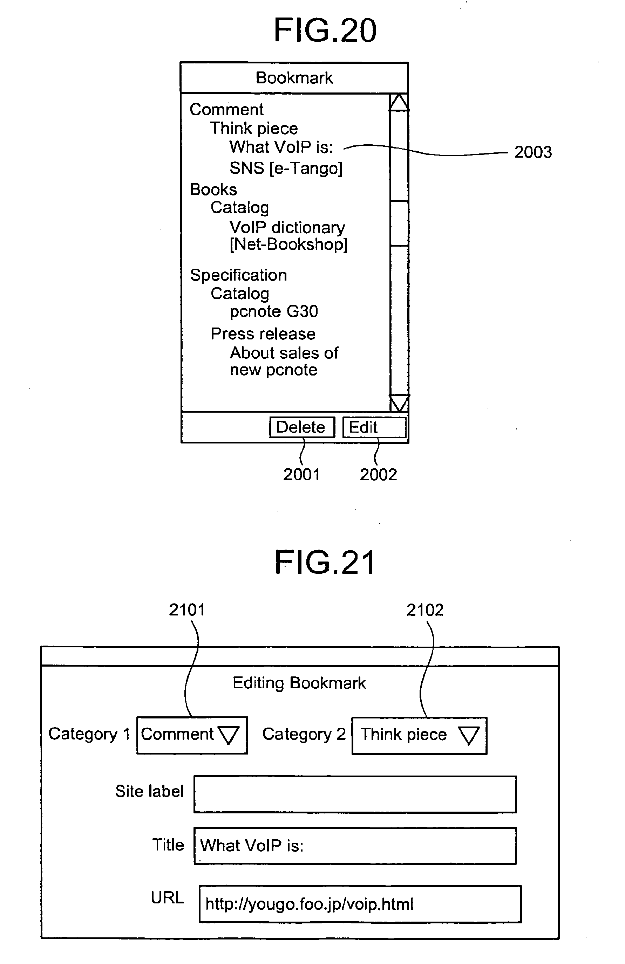

It can be confirmed in an item 2003 shown in Fig. 20 that the added bookmark indicating the input document data is registered.

In this way, if the bookmark information present in the bookmark storage unit 124 is renewed, the bookmark management unit 123 reads out the bookmark information from the bookmark storage unit 124, and renews the display screen based on the read out bookmark information.

In addition, the bookmark shown in Fig. 20 can be edited. For example, the user selects an arbitrary bookmark, and presses a deleting button 2001, so that the bookmark management unit 123 deletes information about the selected bookmark from the bookmark storage unit 124.

When the user selects an arbitrary bookmark, and presses an editing button 2002, a user interface for editing bookmarks is displayed.

On an exemplary editorial screen shown in Fig. 21, the user can edit each information associated as selected bookmark information.

The user can change items displayed in the exemplary editorial screen shown in Fig. 21, namely, site label, title, URL, and the like, to an arbitrary value. In addition, category 1 and category 2 can be set by selecting appropriate value from a plurality of values present in a pull-down menu 2101 and a pull-down menu 2102.

Returning to Fig. 1, the action revising unit 125 can makes a revision, such as addition, correction, and deletion onto the action knowledge information present in the action storage unit 120. A case where an action is added is explained below.

First of all, in a state where the screen shown in Fig. 9 is displayed, if the user presses the setting button 906, the setting menu shown in Fig. 10 is displayed. If an item "add this site to search destination" is selected from the setting menu, the action revising unit 125 adds information, such as an address of the input document data displayed in the area 902 in Fig. 9, to the action storage unit 120 as action knowledge information to be a search destination. A detailed process will be described later.

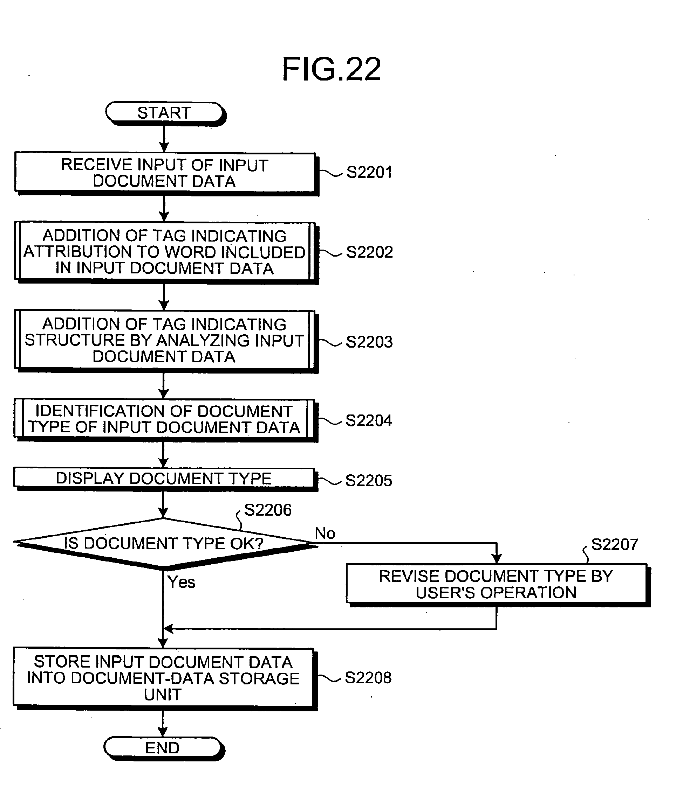

A process performed by the contents browsing apparatus 100 from adding the document type to received input document data until storing it into the document-data storage unit 107 is explained below with reference to Fig. 22.

To begin with, the document input unit 101 receives input document data (step S2201). The document input unit 101 then passes the received input document data to the attribution adding unit 102.

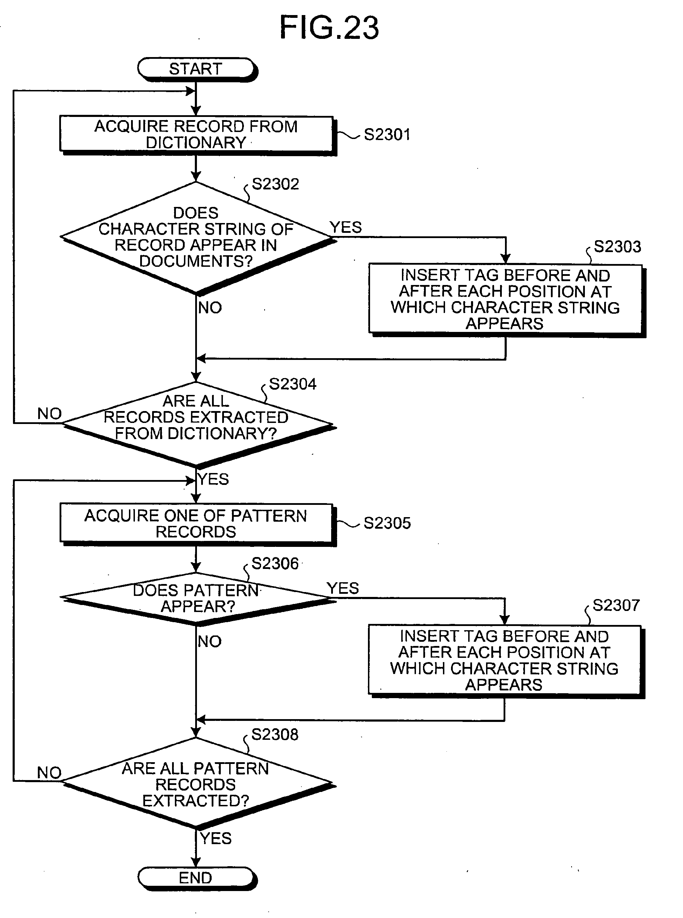

The attribution adding unit 102 then attaches a tag that includes a word attribution indicating a word included in the received input document data to the word (step S2202). Details are shown in Fig. 23.

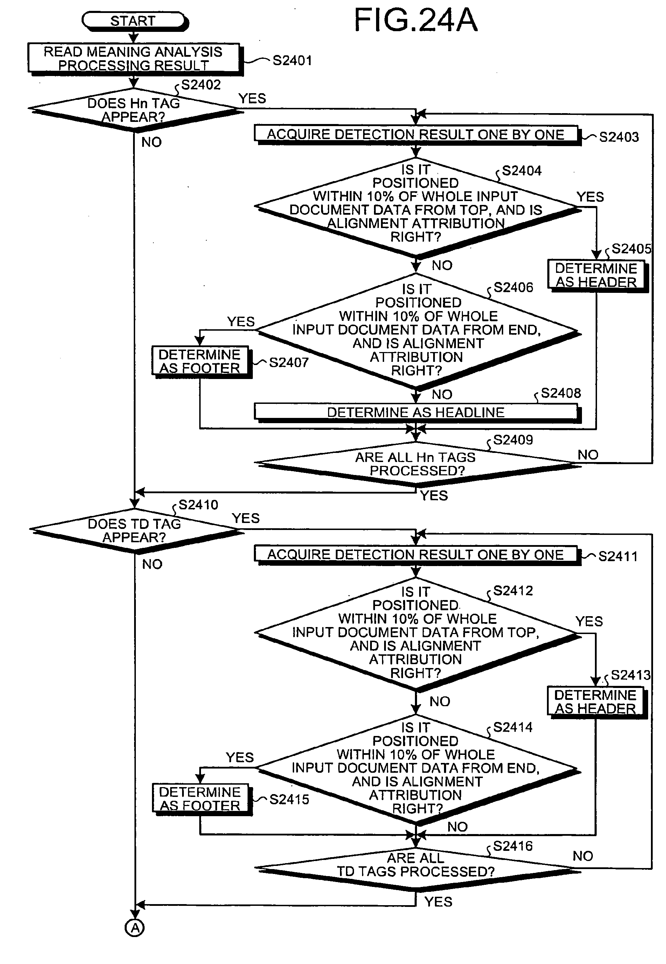

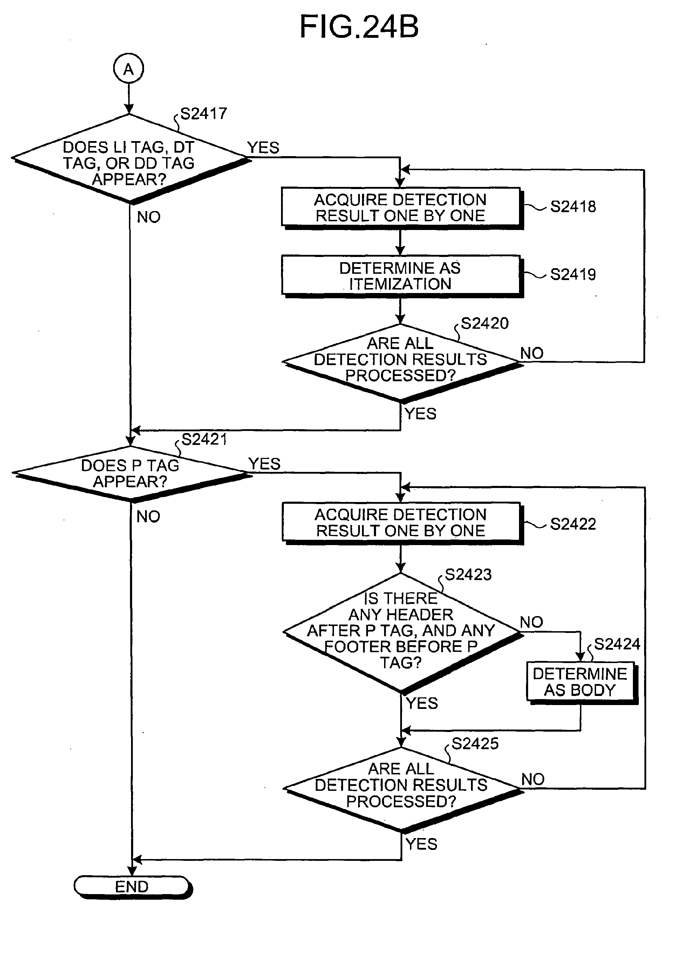

Subsequently, the document-attribution adding unit 103 attaches a tag that includes a document structural attribution by analyzing the input document data (step S2203). Details are shown in Figs. 24A and 24B.

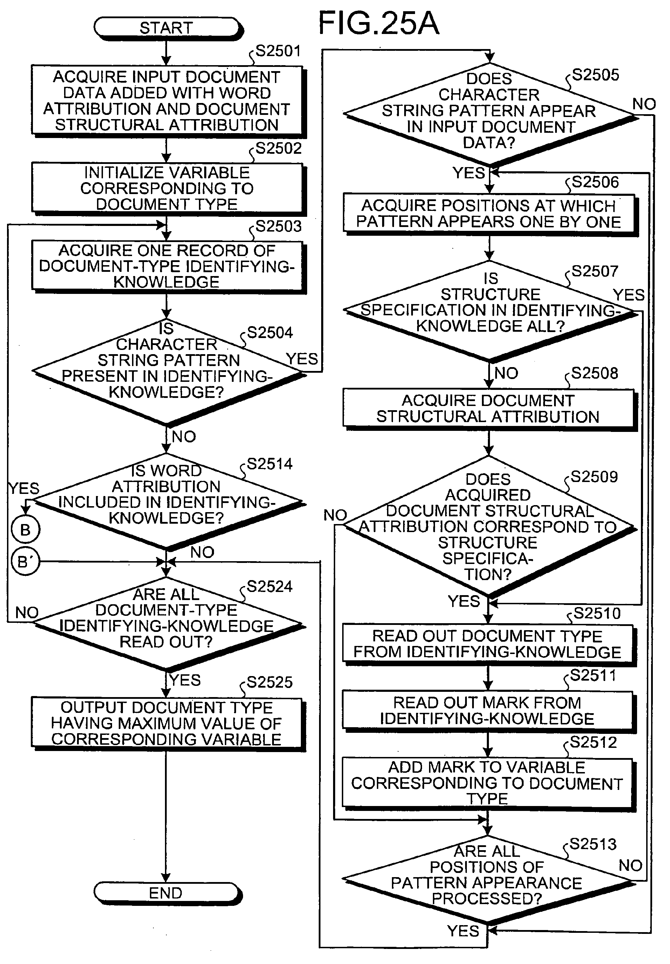

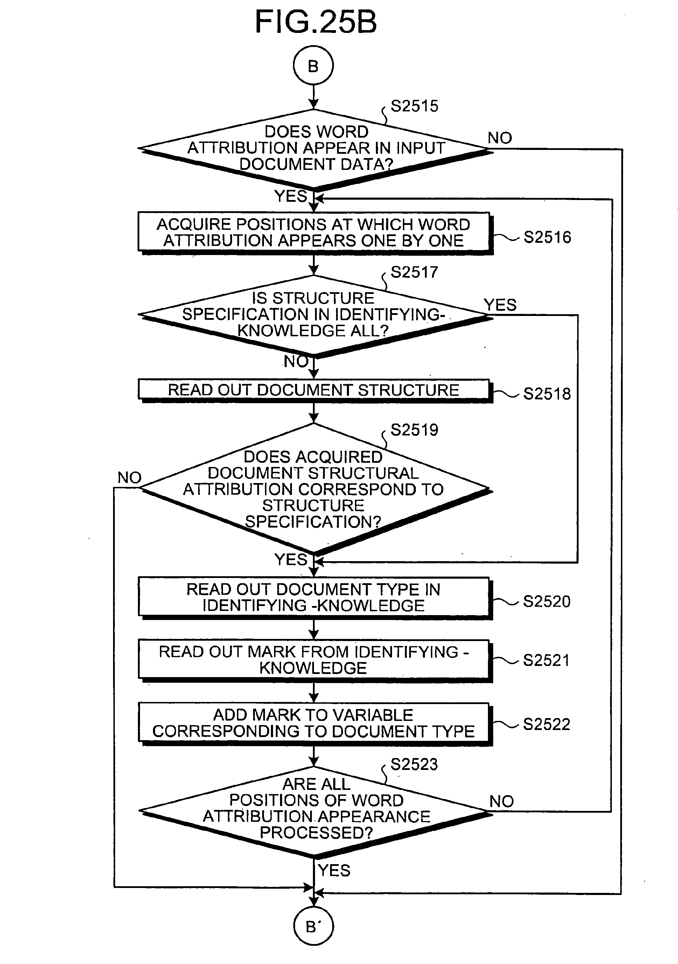

Subsequently, the document-type identifying unit 104 identifies the document type of the input document data based on the attached tags (step S2204). Details are shown in Fig. 25.

The document-type display unit 105 then displays the document type (step S2205). Thus, the user can confirm whether the displayed document type is appropriate.

Next, the document-type identifying unit 104 determines whether the document type is appropriate in accordance with operation input by the user (step S2206).

If the document-type identifying unit 104 determines that the document type is appropriate (Yes at step S2206), no more processing is particularly performed on the document type.

By contrast, if the document-type identifying unit 104 determines that the document type is not appropriate (No at step S2206), the document-type revising unit 106 makes a revision of the determined document type in accordance with operation by the user (step S2207).

The document-type identifying unit 104 then stores the input document data in which the determined document type is embedded into the document-data storage unit 107 (step S2208).

According to the processing, the document type and the word attribution are embedded in the input document data. When the input document data is displayed, as input of an annotation is received, an action in accordance with an intention of the user can be specified by using the embedded information, such as the document type.

The process of adding the word attribution to a word included in the input document data shown at step S2202 in Fig. 22, is explained below with reference to Fig. 23.

To realize the attribution adding unit 102, for example, a characteristic-expression extracting method (Yumi Ichimura, et al., "Question and Answer, and Consideration of Relation between Extraction of Japanese Characteristic Expression and Characteristic Expression System", Research Report by Information Processing Society of Japan, NL-161-3, 2004), which is known in public, can be used. In the process, the input document data in HTML format shown in Fig. 2 is subjected to the processing.

The dictionary adding unit 131 acquires a record in which a surface character string is associated with a word attribution from the word-attribution association dictionary 133 (step S2301).

The dictionary adding unit 131 then searches across the input document data subjected to the processing by a surface character string in the acquired record, and confirms whether the character string appears (step S2302). For example, if the dictionary adding unit 131 acquires the record 301 shown in Fig. 3, in which the surface character string "Sato" is associated with the word attribution "personal name", from the word-attribution association dictionary 133, the dictionary adding unit 131 searches the input document data by the surface character string "Sato" as a search key. If the dictionary adding unit 131 confirms that the character string does not appear (No at step S2302), the dictionary adding unit 131 does not perform processing using the record 301 on the input document data.

By contrast, if the dictionary adding unit 131 confirms that the character string appears in the input document data (Yes at step S2302), the dictionary adding unit 131 inserts a tag that indicates a word attribution with which the surface character string is associated before and after the position of the appearance in the input document data (step S2303).

For example, in the record 301, because the word attribution corresponding to the surface character string "Sato" is "personal name", if the input document data includes the character string "Sato", the dictionary adding unit 131 inserts a tag <SPAN class="personal name"> before the character string, and a tag </SPAN > after the character string.

Furthermore, if the dictionary adding unit 131 detects in the input document data a plurality of the same surface character strings as that registered in the word-attribution association dictionary 133, the dictionary adding unit 131 inserts tags to all positions of the detected surface character strings.

The dictionary adding unit 131 then determines whether the processing has been performed on all of the records present in the word-attribution association dictionary 133 (step S2304). If the dictionary adding unit 131 determines that the processing has not been performed on all of the records (No at step S2304), the dictionary adding unit 131 starts again the processing of acquiring a record from the word-attribution association dictionary 133 (step S2301). In this way, the processing of steps S2301 to S2304 are repeated until all of the records are take out from the word-attribution association dictionary 133 at step S2301.

The pattern adding unit 132 then acquires a record in which a pattern is associated with a word attribution from the pattern storage unit 134 (step S2305).

The pattern adding unit 132 then searches the input document data that is a processing result until step S2304 for a portion that corresponds to the pattern of the acquired record, and confirms whether a corresponding character string appears (step S2306). If the pattern adding unit 132 confirms that the pattern does not appear (No at step S2306), the pattern adding unit 132 does not perform processing using the pattern on the input document data.

By contrast, if the pattern adding unit 132 confirms that a character string corresponding to the pattern appears in the input document data (Yes at step S2306), the pattern adding unit 132 inserts tags that indicates the word attribution associated with the pattern before and after the character string (step S2307).

For example, if the pattern adding unit 132 acquires the record 401 shown in Fig. 4 as a pattern, the pattern adding unit 132 determines that the character string "Tozai-Denki Co., Ltd." in the input document data shown in Fig. 2 corresponds to the pattern. The pattern adding unit 132 then determines to add a word attribution to the character string "Tozai-Denki". According to the pattern in the record 401, the associated word attribution is "company name". Accordingly, the pattern adding unit 132 inserts a tag <SPAN class="company name"> before the character string "Tozai-Denki" in the input document data, and a tag </SPAN > after the character string "Tozai-Denki" (step S2308).

The pattern adding unit 132 then determines whether the processing has been finished on all of the records present in the pattern storage unit 134 (step S2308). If the pattern adding unit 132 determines that the processing has not been finished on all of the records (No at step S2308), the pattern adding unit 132 starts again the processing of acquiring a record from the pattern storage unit 134 (step S2305). In this way, the processing of steps S2305 to S2308 are repeated until all of the records are take out from the pattern storage unit 134 at step S2305.

By performing the processing described above, the attribution adding unit 102 can adds the word attribution to a word in the input document data. A result of the processing performed by the attribution adding unit 102 is as shown in Fig. 5.

The process of adding the document structural attribution described at step S2203 shown in Fig. 22 is explained below with reference to Figs. 24A and 24B.

It is assumed that attributions of the document structure to be identified by the document-attribution adding unit 103 are predetermined. In the following description, it is assumed that the predetermined attributions include header, headline, itemization, body, and footer.

To begin with, the document-attribution adding unit 103 receives the input document data added with the tags indicating the word attributions from the attribution adding unit 102 (step S2401). In the process, it is assumed that the document-attribution adding unit 103 receives the input document data shown in Fig. 5.

The document-attribution adding unit 103 then searches across the input document data for a tag <Hn> and a tag </Hn>, and confirms whether any tag <Hn> and any tag </Hn> appear in the input document data (step S2402). The tag <Hn> means a tag <H1>, a tag <H2>, or the like.

If the document-attribution adding unit 103 confirms the appearance of the tag <Hn> and the tag </Hn> (Yes at step S2402), the document-attribution adding unit 103 acquires a piece of partial HTML enclosed with the tags one by one (step S2403).

The document-attribution adding unit 103 then determines whether an acquired piece of partial HTML is positioned within 10% of the whole input document data from the top, and a value of the alignment attribution is right (step S2404).

If the document-attribution adding unit 103 determines that the acquired partial HTML is positioned within 10% of the whole input document data from the top, and the value of the alignment attribution is right (Yes at step S2404), the document-attribution adding unit 103 determines that the partial HTML is a header (step S2405). The document-attribution adding unit 103 then inserts a tag <SPAN class="header"> directly before the partial HTML, and a tag </SPAN> directly after the partial HTML.

By contrast, if the document-attribution adding unit 103 determines that the partial HTML is not positioned within 10% of the whole input document data from the top, or the value of the alignment attribution is not right (No at step S2404), the document-attribution adding unit 103 then determines whether the partial HTML is positioned within 10% of the whole input document data from the end, and a value of the alignment attribution is right (step S2406).

If the document-attribution adding unit 103 determines that the partial HTML is positioned within 10% of the whole input document data from the end, and the value of the alignment attribution is right (Yes at step S2406), the document-attribution adding unit 103 determines that the partial HTML is a footer (step S2407). The document-attribution adding unit 103 then inserts a tag <SPAN class="footer"> directly before the partial HTML, and a tag </SPAN> directly after the partial HTML.

By contrast, if the document-attribution adding unit 103 determines that the partial HTML is positioned within 10% of the whole input document data from the end, and the value of the alignment attribution is not right (No at step S2406), the partial HTML is determined as a headline (step S2408). The document-attribution adding unit 103 then inserts a tag <SPAN class="headline"> directly before the partial HTML, and a tag </SPAN> directly after the partial HTML.

The document-attribution adding unit 103 then determines whether the processing of steps S2403 to S2408 has been performed on all of the tags <Hn> included in all pieces of the partial HTML detected at step S2402 (step S2409). If the document-attribution adding unit 103 determines that the processing has not been performed on all of the tags <Hn> (No at step S2409), the document-attribution adding unit 103 performs the processing again from step S2403. By contrast, if the document-attribution adding unit 103 determines that the processing is finished on all of the tags <Hn>, the document-attribution adding unit 103 goes to step S2410.

The document-attribution adding unit 103 then searches across the input document data for a tag <TD> and a tag </TD>, and confirms whether any tag <TD> and any tag </TD> appear in the input document data (step S2410).

If the document-attribution adding unit 103 confirms the appearance of the tag <TD> and the tag </TD> (Yes at step S2410), the document-attribution adding unit 103 acquires a piece of partial HTML enclosed with the tags one by one (step S2411).

The document-attribution adding unit 103 then determines whether an acquired piece of partial HTML is positioned within 10% of the whole input document data from the top, and a value of the alignment attribution is right (step S2412).

If the document-attribution adding unit 103 determines that the acquired partial HTML is positioned within 10% of the whole input document data from the top, and the value of the alignment attribution is right (Yes at step S2412), the document-attribution adding unit 103 determines that the partial HTML is a header (step S2413). The document-attribution adding unit 103 then inserts a tag <SPAN class="header"> directly before the partial HTML, and a tag </SPAN> directly after the partial HTML.

By contrast, if the document-attribution adding unit 103 determines that the partial HTML is positioned within 10% of the whole input document data from the top, and the value of the alignment attribution is not right (No at step S2412), the document-attribution adding unit 103 then determines whether the partial HTML is positioned within 10% of the whole input document data from the end, and the value of the alignment attribution is right (step S2414).

If the document-attribution adding unit 103 determines that the partial HTML is positioned within 10% of the whole input document data from the end, and the value of the alignment attribution is right (Yes at step S2414), the document-attribution adding unit 103 determines that the partial HTML is a footer (step S2415). The document-attribution adding unit 103 then inserts a tag <SPAN class="footer"> directly before the partial HTML, and a tag </SPAN> directly after the partial HTML.

By contrast, if the document-attribution adding unit 103 determines that the partial HTML is positioned within 10% of the whole input document data from the end, and the value of the alignment attribution is not right (No at step S2414), the document-attribution adding unit 103 does not perform particular processing.

The document-attribution adding unit 103 then performs the processing of steps S2411 to S2415 on all pieces of the partial HTML detected at step S2410 one by one (step S2416).

Moving to Fig. 24B, the document-attribution adding unit 103 confirms whether a tag <LI>, a tag <DT>, or a tag <DD> appear in the input document data (step S2417). If the document-attribution adding unit 103 cannot confirm appearance of the tag <LI>, the tag <DT>, or the tag <DD> (No at step S2417), the document-attribution adding unit 103 does not perform processing and goes to step S2421.

By contrast, if the document-attribution adding unit 103 confirms the appearance of the tag <LI>, the tag <DT>, or the tag <DD> (Yes at step S2417), the document-attribution adding unit 103 acquires a piece of partial HTML specified with the tags one by one (step S2418).

The document-attribution adding unit 103 then determines that the acquired partial HTML is itemization (step S2419). The document-attribution adding unit 103 then inserts a tag <SPAN class="itemization"> directly before the partial HTML, and a tag </SPAN> directly after the partial HTML.

The document-attribution adding unit 103 then performs the processing of steps S2418 to S2419 on all pieces of the partial HTML detected at step S2417 one by one (step S2420).

The document-attribution adding unit 103 then searches across the input document data for a tag <P> and a tag </P>, and confirms whether any tag <P> and any tag </P> appear in the input document data (step S2421). If the document-attribution adding unit 103 cannot confirm appearance of any tag <P> and any tag </P> (No at step S2421), the document-attribution adding unit 103 performs no more processing, and terminates the processing.

By contrast, if the document-attribution adding unit 103 confirms the appearance of the tag <P> (Yes at step S2421), the document-attribution adding unit 103 acquires a piece of partial HTML enclosed with the tags one by one (step S2422).

The document-attribution adding unit 103 confirms whether no partial HTML determined as the header in the process is present after an acquired piece of partial HTML in the input document data, and no partial HTML determined as the footer in the process is present before the acquired HTML (step S2423).

If the document-attribution adding unit 103 confirms that no partial HTML is present as described above (No at step S2423), the document-attribution adding unit 103 determines that the acquired partial HTML is a body (step S2424). The document-attribution adding unit 103 then inserts a tag <SPAN class="body"> directly before the partial HTML, and a tag </SPAN> directly after the partial HTML.

The document-attribution adding unit 103 then performs the processing of steps S2422 to S2423 on all pieces of the partial HTML detected at step S2421 one by one (step S2425).

In this way, the document-attribution adding unit 103 analyzes the document structure of input document data, and adds the document structure information to the input document data, according to the process shown in Figs. 24A and 24B. According to the above process, the document-attribution adding unit 103 creates, for example, the input document data shown in Fig. 6.

The process of identifying the document type of the input document data performed by the document-type identifying unit 104 at step S2206 shown in Fig. 22, is explained below with reference to Figs. 25A and 25B.

It is assumed that the document type of input document data to be identified by the document-type identifying unit 104 is predetermined. In the process, a case where the document-type identifying unit 104 determines the document type from among think piece, event information, and press release, is explained below as an example. To explain, it is assumed that the document-type identifying unit 104 uses the document-type identifying-knowledge storage unit 111 shown in Fig. 7.

To begin with, the document-type identifying unit 104 acquires input document data with document structural attributions added by the document-attribution adding unit 103 (step S2501). The acquired input document data includes added word attributions and the added document structural attributions.

The document-type identifying unit 104 then initializes each numeric type variable associated with each predetermined document type (step S2502).
the document-type identifying unit 104 then acquires a record of the document-type identifying-knowledge information present in the document-type identifying-knowledge storage unit 111 (step S2503).

The document-type identifying unit 104 then determines whether a character string pattern is present in the acquired record (step S2504).

If the document-type identifying unit 104 determines that the character string pattern is present in the acquired record (Yes at step S2504), the document-type identifying unit 104 then searches the input document data, and determines whether the character string pattern appears in the input document data (step S2505). If the document-type identifying unit 104 determines that the character string pattern does not appear in the input document data (No at step S2505), the document-type identifying unit 104 does not perform processing particularly.

By contrast, if the document-type identifying unit 104 determines that that the character string pattern appears in the input document data (Yes at step S2505), the document-type identifying unit 104 acquires positions at which the character string pattern appears one by one (step S2506).

The document-type identifying unit 104 then confirms whether a structure specification associated with the character string is ALL in the acquired record (step S2507). If the structure specification is described as ALL (Yes at step S2507), the document-type identifying unit 104 does not perform processing particularly.

By contrast, if the document-type identifying unit 104 confirms that the structure specification is not ALL (No at step S2507), the document-type identifying unit 104 acquires a document structural attribution added at the appeared position (step S2508).

The document-type identifying unit 104 compares the acquired document structural attribution with the structure specification (step S2509). If the document-type identifying unit 104 determines that the acquired document structural attribution does not correspond to the structure specification (No at step S2509), the document-type identifying unit 104 does not perform processing particularly.

By contrast, if the document-type identifying unit 104 determines that the acquired document structural attribution corresponds to the structure specification (Yes at step S2509), the document-type identifying unit 104 reads out a document type associated the structure specification of the record in the document-type identifying-knowledge information (step S2510). Furthermore, the document-type identifying unit 104 reads out a mark associated in the record (step S2511).

The document-type identifying unit 104 then adds the read out mark to the variable corresponding to the read out document type (step S2512).

In this way, the document-type identifying unit 104 performs the processing of steps S2506 to S2512 at all positions detected at step S2503 one by one (step S2513).

If the document-type identifying unit 104 determines that the character string pattern is not present in the acquired record (No at step S2504), the document-type identifying unit 104 determines whether a word attribution is present in the acquired record (step S2514).

If the document-type identifying unit 104 determines that a word attribution is present in the record (Yes at step S2514), as shown in Fig. 25B, the document-type identifying unit 104 searches the input document data for the word attribution, and determines whether the word attribution appears in the input document data (step S2515). If the document-type identifying unit 104 determines that the word attribution does not appears in the input document data (No at step S2515), the document-type identifying unit 104 does not perform processing particularly.

By contrast, if the document-type identifying unit 104 determination that the word attribution appears in the input document data (Yes at step S2515), the document-type identifying unit 104 acquires positions at which the word attribution appears one by one (step S2516).

The document-type identifying unit 104 then confirms whether a structure specification associated with the word attribution is ALL in the acquired record (step S2517). If the document-type identifying unit 104 confirms that the structure specification is ALL (Yes at step S2517), the document-type identifying unit 104 does not perform processing particularly.

By contrast, if the document-type identifying unit 104 confirms that the structure specification is not ALL (No at step S2517), the document-type identifying unit 104 reads out a document structural attribution that covers a position at which the word attribution appears (step S2518). The document-type identifying unit 104 compares the read out document structural attribution with the structure specification described in the document-type identifying-knowledge information (step S2519). If the document-type identifying unit 104 determines that the read out document structure does not correspond to the structure specification (No at step S2519), the document-type identifying unit 104 does not perform processing particularly.

By contrast, if the document-type identifying unit 104 determines that the read out document structure corresponds to the structure specification (Yes at step S2519), the document-type identifying unit 104 reads out a document type associated with the structure specification in the record (step S2520). The document-type identifying unit 104 then reads out a mark associated with the structure specification in the record (step S2521).

The document-type identifying unit 104 then adds the acquired mark to the variable corresponding to the acquired document type (step S2522).

In this way, the document-type identifying unit 104 performs the processing of steps S2516 to S2522 at all positions detected at step S2515 one by one (step S2523).

Moreover, the document-type identifying unit 104 performs the processing of steps S2503 to S2523 on all records present in the document-type identifying-knowledge information (step S2524).

Finally, the document-type identifying unit 104 compares values of variables each of which corresponds to each document type, and outputs a document type that has the maximum value as an identification result (step S2525).

Thus, the document type can be identified by performing such processing in the first embodiment. In addition, if all of the values are zero at step S2525, the document-type identifying unit 104 outputs an identification result as "unknown".

An example of input document data of which a document type is identified by the document-type identifying unit 104 in this way is shown in Fig. 8. In the example shown in Fig. 8, it is assumed that the document-type identifying unit 104 identifies that the document type is event information. The document-type identifying unit 104 then inserts the identified document type into the metatag 801 as shown in Fig. 8.

After the above processing is finished, the document-type identifying unit 104 stores the input document data into the document-data storage unit 107. Alternatively, the display-processing unit 108 can directly displays the input document data without storing it into the document-data storage unit 107 by the document-type identifying unit 104.

By performing such processing, the input document data in which the document type is embedded can be created. In the first embodiment, the display-processing unit 108 displays the input document data.

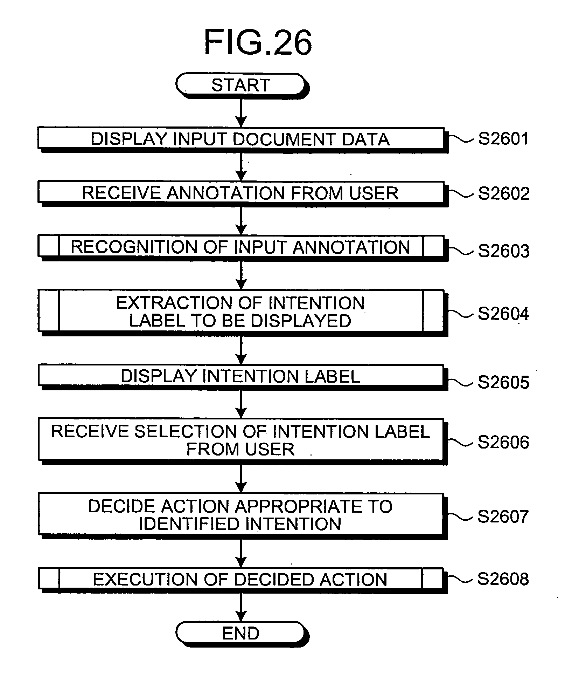

The process of executing an action performed by the contents browsing apparatus 100 when an annotation is input onto the input document data attached with the document type is explained below with reference to Fig. 26.

To begin with, the display-processing unit 108 displays the input document data present in the document-data storage unit 107 (step S2601). In this case, the screen as shown in Fig. 9 is displayed.

The annotation-input receiving unit 109 then receives input of an annotation from the user (step S2602). For example, if the user who views the screen shown in Fig. 9 has an intention to execute an action onto contents of presented information, the user performs writing operation onto the presented information with pen. The contents browsing apparatus 100 receives input of the writing operation as an annotation. The input underline is then transmitted to the annotation recognition unit 110 via the annotation-input receiving unit 109.

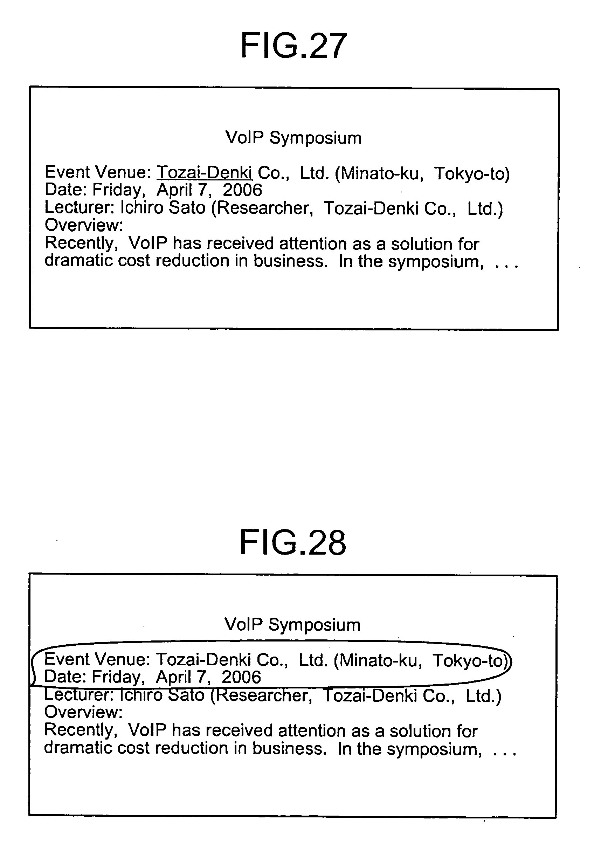

In the screen example shown in Fig. 27, it is presumed that the user performed input, such as drawing an underline in relation to a keyword "Tozai-Denki" for checking Tozai-Denki, because the user does not know like what company Tozai-Denki is.

If a path of an annotation is continuous, or even when paths are discontinuous, if a time interval between them is shorter than a predetermined time, the annotation-input receiving unit 109 receives input as an annotation. In this way, the annotation-input receiving unit 109 distinguishes each annotation, and detects information, such as the starting point (start of writing with pen) and the ending point (end of writing) of each of the input annotations, order of writing, the direction and the length of the line (path length), and the position, per pixel, which constructs the screen, with respect to the lower left corner of the screen as the base.

In a screen example shown in Fig. 28, it is presumed that the user performs input, such as enclosing character strings, because the user wants to clip the enclosed character strings with respect to each of document types.

Returning to Fig. 26, the annotation recognition unit 110 identifies an applicable range and a type of each annotation in the input document data based on coordinates of the starting point and the ending point and the length of a path of the received annotation (step S2603). A detailed process will be described later.

The intention extracting unit 116 then extracts an intention label that indicates an intention of the user to be displayed based on a recognition result obtained by the annotation recognition unit 110, an word attribution, a document structural attribution, or a document type included in the displayed input document data, and the intention identifying-knowledge information prestored in the intention identifying-knowledge storage unit 118 (step S2604).

For example, when "Tozai-Denki" is underlined, because "Tozai-Denki" is attached with the word attribution "company name" in advance, and the annotation condition is underline, the intention extracting unit 116 extracts intention labels "search subject: map", "search subject: stock price", and "search subject: company profile" as applicable labels from the intention identifying-knowledge information shown in Fig. 11. A detailed process will be described later.

The intention display-processing unit 114 then displays the determined intention labels (step S2605). The intention label is displayed on a screen, for example, as shown in Fig. 12 or Fig. 13. Moreover, the intention display-processing unit 114 preferentially displays intention labels associated with a document type in the intention identifying-knowledge information shown in Fig. 11 corresponding to the document type of the displayed input document data.

The intention-selection receiving unit 115 then receives a selection of an intention label that corresponds to the intention desired by the user from among the displayed intention labels (step S2606). For example, in the screen example shown in Fig. 12, the intention-selection receiving unit 115 receives a selection which the user desires to know from among the map, the company profiles, and the stock price of Tozai-Denki.

The action deciding unit 117 then selects an action corresponding to the selected intention label (step S2607). The action deciding unit 117 uses the action storage unit 120 to select an action corresponding to the intention label. Thus, an action corresponding to the intention label can be specified. If a plurality of actions correspond to the intention label, it is acceptable that the actions are presented to the user, and then a selection from the actions is received. The screen example shown in Fig. 14 is a screen for receiving a selection of an action form the user.

The executing unit 121 then executes the action selected by the action deciding unit 117 (step S2608).

By performing the processing described above, intention labels presumed as the intention of the user are presented in accordance with the input annotation, and the action can be performed by receiving a selection of the intention label. Moreover, when presenting the intention labels, the intention labels are displayed in preferential order by using document types. Thus, the user can easily specify an intention label that corresponds to the intention of the user.

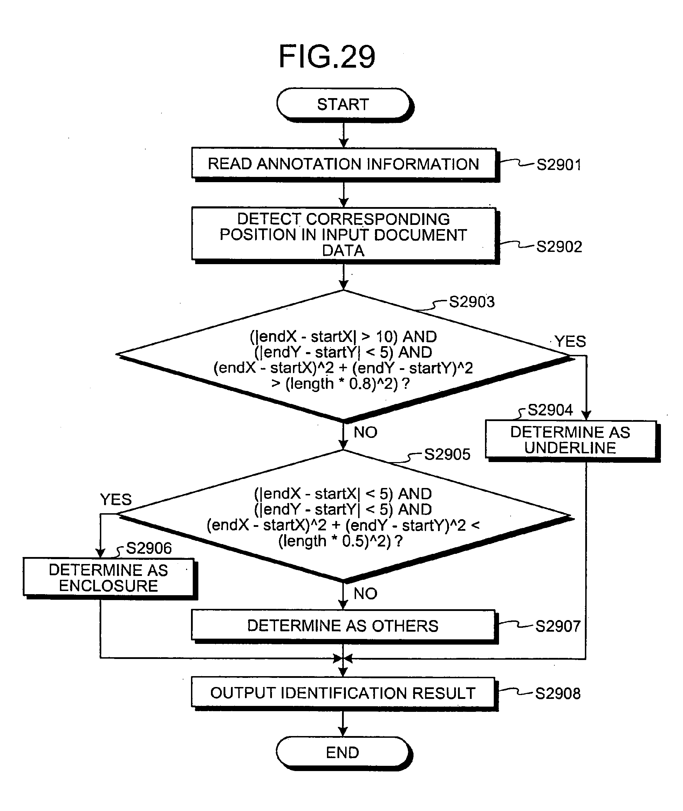

The processing of identifying the received annotation performed by the annotation recognition unit 110 is explained below with reference to Fig. 29.

First of all, it is assumed that types of identifiable annotations are predetermined in the annotation recognition unit 110. The annotation recognition unit 110 identifies to which type a received annotation belongs from among a plurality of predetermined types.

In the first embodiment, it is assumed that identifiable annotations to be identified by the annotation recognition unit 110 can be categorized into underline, enclosure, and others. In the following description, the annotation underline refers to the annotation shown in Fig. 27, and the annotation enclosure refers to the annotation shown in Fig. 28.

To begin with, the annotation recognition unit 110 reads in annotation information from the annotation-input receiving unit 109 (step S2901).

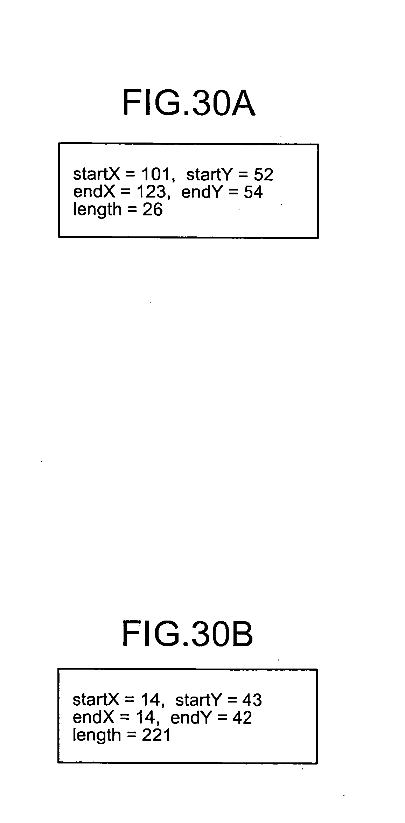

When the annotation shown in Fig. 27 is received, the annotation recognition unit 110 reads in annotation information (shown in Fig. 30A) detected by the annotation-input receiving unit 109.

When the annotation shown in Fig. 28 is received, the annotation recognition unit 110 reads in annotation information (shown in Fig. 30B) detected by the annotation-input receiving unit 109.

In the annotation information shown in Figs. 30A and 30B, startX and startY denote the x coordinate and the y coordinate of the starting point of the annotation, and endX and endY denote the x coordinate and the y coordinate of the ending point of the annotation, respectively. In addition, length in the annotation information denotes the length of a path of the annotation as a distance from the starting point until the ending point. The base point of each of coordinates and unit can be defined per processing system. For example in Figs. 30A and 30B, the base point is at the lower left corner of the screen, and each of pixels that form the screen is a unit.

Returning to Fig. 29, the annotation recognition unit 110 detects a position in the input document data that is marked with the annotation from the read-in annotation information (step S2902).

For example, the annotation recognition unit 110 specifies an area in which the annotation is input in the displayed input document data as an applicable range of the annotation based on plane coordinates on the input document data and coordinates of the annotation included in the received annotation information.

The annotation recognition unit 110 identifies which character string is specified in the input document data from the specified applicable range. Moreover, the annotation recognition unit 110 detects a word attribution and a document structural attribution added to the specified character string.

For example, in the screen example shown in Fig. 27, the annotation recognition unit 110 identifies that the character string "Tozai-Denki" is specified with the annotation. In the screen example shown in Fig. 28, the annotation recognition unit 110 identifies that the character strings from "place" until "Friday, April 7, 2006" are specified. Moreover, the annotation recognition unit 110 acquires the identified character strings as the character strings included in the HTML document shown in Fig. 8, for example.

The annotation recognition unit 110 then determines the type of the annotation by using respective values included in the read-in annotation information, namely, startX and startY of the starting point, endX and endY of the ending point, and the length of the path on the input document data. Detailed conditions are described below.

The annotation recognition unit 110 determines whether the annotation satisfies the following conditions: a difference between the x coordinate of the starting point and the x coordinate of the ending point is larger than a first threshold (for example, 10); a difference between the y coordinate of the starting point and the y coordinate of the ending point is smaller than a second threshold (for example, 5); and a distance between the starting point and the ending point is longer than a value of the length of the path (length) multiplied by a third predetermined value (for example, 0.8) (step S2903).

If the conditions are satisfied (Yes at step S2903), the annotation recognition unit 110 determines that the annotation is underline (step 52904).

For example, in the case of the annotation shown in Fig. 27, the annotation information shown in Fig. 30A is read in. The read-in annotation information is applied to the conditions described at step S2903. In this case, the starting point is at startX=101, and startY=52; the ending point is at endX=123, and endY=54; and the length of the path is length=26.

In other words, in the annotation information shown in Fig. 30A, |endX-startX| is 22, which is larger than the first threshold (for example, 10); and |endY-startY| is 2, which is smaller than the second threshold (for example, 5).

In addition, (endX-startX)^2+(endY-startY)^2 is 488, accordingly (length*0.8)^2 becomes 432.64, so that the distance between the starting point and the ending point is longer than the length of the path (length) multiplied by the third predetermined value (for example, 0.8).

In other words, it can be confirmed that the annotation shown in Fig. 30A satisfies the conditions for being underline. Thus, the annotation can be confirmed as underline.

For example, in the case of the annotation shown in Fig. 28, the annotation information shown in Fig. 30B is read in. The read-in annotation information is applied to the conditions described at step S2903. In this case, the starting point is at startX=14, and startY=43; the ending point is at endX=14, and endY=42; and the length of the path is length=221. In the annotation information shown in Fig. 30B, |endX-startX| is 0, which is smaller than the first threshold (for example, 10). In other words, the annotation shown in Fig. 30B does not satisfy the conditions for being identified as underline.

If the annotation recognition unit 110 determines that the annotation does not satisfy the conditions for being underline (No at step S2903), the annotation recognition unit 110 determines whether the annotation satisfies conditions for being enclosure.

The annotation recognition unit 110 determines whether the annotation satisfies the following conditions: a difference between the x coordinate of the starting point and the x coordinate of the ending point is smaller than a fourth threshold (for example, 5); a difference between the y coordinate of the starting point and the y coordinate of the ending point is smaller than a fifth threshold (for example, 5); and a distance between the starting point and the ending point is shorter than a value of the length of the path (length) multiplied by a sixth predetermined value (for example, 0.5) (step S2905).

If the conditions are satisfied (Yes at step S2905), the annotation recognition unit 110 determines that the annotation is enclosure (step S2906).

For example, in the case of the annotation shown in Fig. 28, the annotation information shown in Fig. 30B is read in. The read-in annotation information is applied to the conditions described at step S2905. In this case, |endx-startx| is 0, which is smaller than the fourth threshold (for example, 5); and |endY-startY| is 1, which is smaller than the fifth threshold (for example, 5). In addition, (endX-startX)^2+(endY-startY)^2 is 1, accordingly (length*0.5)^2 becomes 12,210.25, so that the distance between the starting point and the ending point is longer than the length of the path (length) multiplied by the sixth predetermined value (for example, 0.5). Thus, the read-in annotation information satisfies the conditions for being enclosure, so that the annotation recognition unit 110 determines that the type of the annotation is enclosure.

If the annotation does not satisfies the conditions for being enclosure (No at step S2905), the annotation recognition unit 110 determines that the type of the annotation is others (step S2907).

The annotation determined as others can be processed in any way, for example, some sort of character strings or symbols can be detected by using a known character recognition technology (particularly, an online character recognition technology by which character recognition is performed on input strokes in real time). If a character string or a symbol is detected in this way, a type of the detection (for example, a type of written a character, or a symbol) can be output together with an identification result.

The annotation recognition unit 110 then outputs the identification result (for example, the type of the annotation, the applicable range, the recognized character string, and the like) (step S2908).

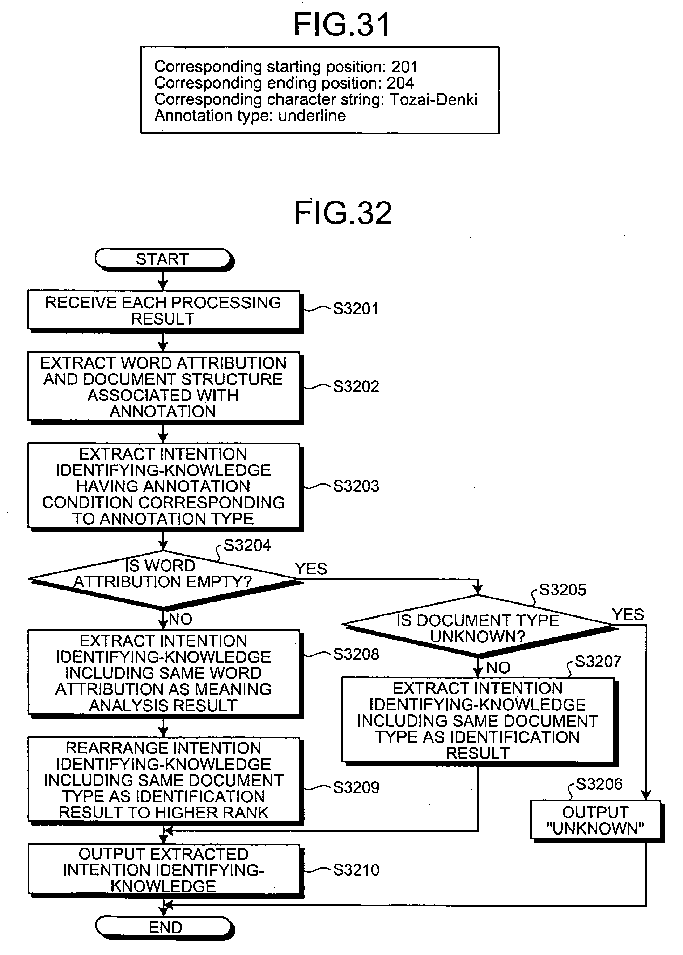

As shown in Fig. 31, the annotation recognition unit 110 can confirm that when the annotation shown in Fig. 27 is written, the type of the annotation is determined as underline.

The process of identifying an intention of the user to the input document data performed by the intention extracting unit 116 at step S2604 shown in Fig. 26 is explained below with reference to Fig. 32.

To begin with, the intention extracting unit 116 receives each of the processing results (step S3201). The processing results include the identification result obtained by the annotation recognition unit 110 and the input document data displayed by the display-processing unit 108. The input document data is already added with word attributions, document structural attributions, and a document type, so that reception of the input document data means that the intention extracting unit 116 receives the processing results obtained by the attribution adding unit 102, the document-attribution adding unit 103, and the document-type identifying unit 104.

The intention extracting unit 116 then extracts information about an applicable range of the annotation specified by the annotation recognition unit 110 (step S3202) from the input document data. In this case, a word attribution and a document structural attribution included in the applicable range of the annotation are also extracted.

For example, if the annotation shown in Fig. 27 is received, a corresponding portion in the input document data shown in Fig. 28 is the character string "Tozai-Denki". The intention extracting unit 116 detects a tag that encloses the character string. If an attribution is defined in the extracted tag, the intention extracting unit 116 extracts the attribution. For example, in the case of the HTML document shown in Fig. 28, the intention extracting unit 116 extracts the word attribution "company name" and the document structural attribution "itemization".

The intention extracting unit 116 then compares the annotation type in the identification result obtained by the annotation recognition unit 110 with the annotation conditions in the intention identifying-knowledge information present in the intention identifying-knowledge storage unit 118 to determine agreement between them, and extracts records of the intention identifying-knowledge information that include a corresponding annotation condition (step S3203).

The intention extracting unit 116 then determines whether a word attribution is extracted from a portion specified with the annotation in the input document data (step S3204). If the intention extracting unit 116 determines that any word attribution is not extracted (Yes at step S3204), concluding that the word attribution of the portion is unknown, the intention extracting unit 116 then determines whether the document type of the input document data is unknown (step S3205).

If the intention extracting unit 116 determines that the document type is unknown (Yes at step S3205), concluding that the intention of the user is not identified, the intention extracting unit 116 then outputs "unknown" (step S3206).

By contrast, if the intention extracting unit 116 determines that the document type is not unknown (No at step S3205), the intention extracting unit 116 extracts a record of the intention identifying-knowledge information that includes the identified document type in the document type condition from the intention identifying-knowledge storage unit 118 (step S3207).

If the intention extracting unit 116 determines that a word attribution is extracted (No at step S3204), the intention extracting unit 116 extracts a record of the intention identifying-knowledge information from the intention identifying-knowledge storage unit 118, the record including the extracted word attribution set as the word attribution condition (step S3208).

For example, if the annotation shown in Fig. 27 is received, the word attribution "company name" corresponding to the word "Tozai-Denki" included in the applicable range is extracted. In this case, because the intention extracting unit 116 determines that the word attribution is extracted, the intention extracting unit 116 searches the intention identifying-knowledge storage unit 118 by the extracted word attribution as the word attribution condition. In addition, when extracting the intention identifying-knowledge information, the annotation condition is set as a search condition.

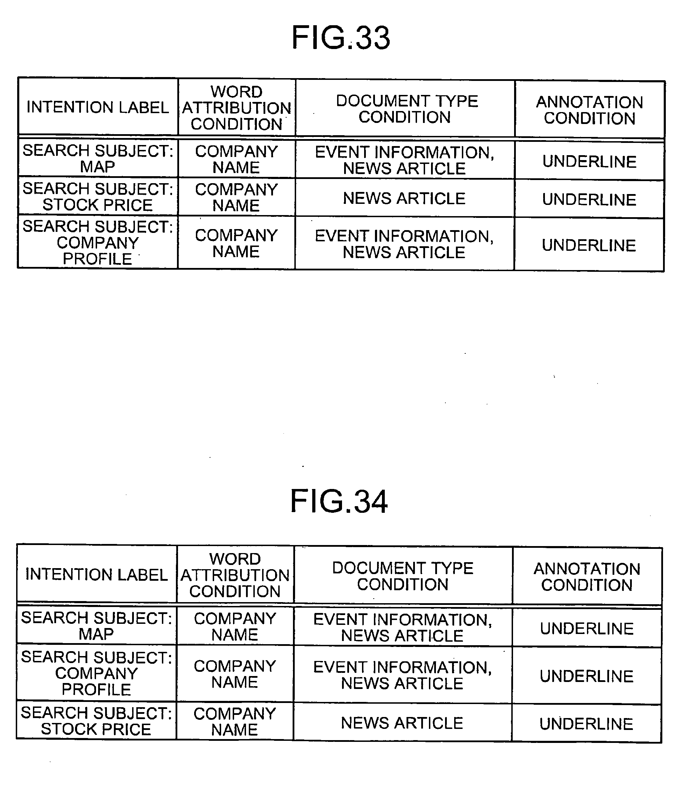

As shown in Fig. 33, if the intention extracting unit 116 performs extraction across the intention identifying-knowledge information by word attribution "company name" and the annotation underline, the intention label "search subject: map", "search subject: stock price", and "search subject: company profile" are detected.

The intention extracting unit 116 then rearranges the extracted records of the intention identifying-knowledge information to rank records of the intention identifying-knowledge information in which the document type extracted from the input document data is set as the document type condition in a higher order (step S3209).

As shown in Fig. 34, the intention extracting unit 116 can confirm that the records of the intention identifying-knowledge information that includes "event information" in the document type condition are rearranged in a higher order.

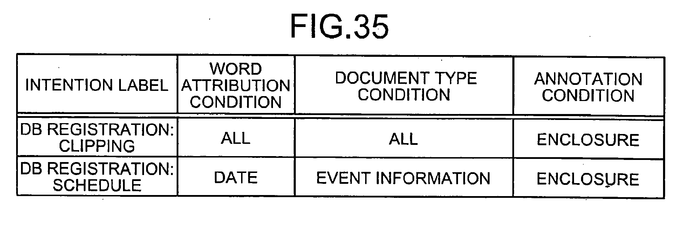

In addition, if the input annotation is an enclosure, the intention extracting unit 116 extracts records of the intention identifying-knowledge information as shown in Fig. 35. A procedure to extract the records in Fig. 35 will be described later.

The intention extracting unit 116 then outputs the extracted records of the intention identifying-knowledge information as an identification result (step S3210).

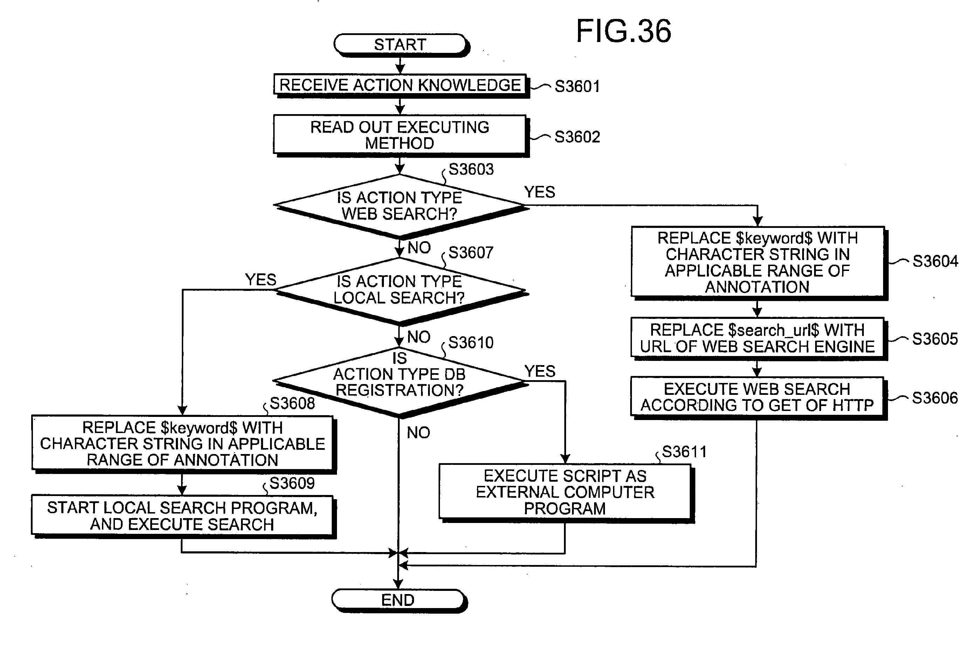

The process of processing executed by the executing unit 121 at step S2608 in Fig. 26 in response to a selection of action knowledge information received from the user is explained with reference to Fig. 36.

To begin with, the executing unit 121 receives action knowledge information (step S3601).

For example, suppose the user has an intention to research "Tozai-Denki" about like what the company is, after selecting "company profiles" as a search subject in Fig. 14, the user selects an option to perform a search with E-search as an action. In this case, the action knowledge information shown at action knowledge information 1504 in Fig. 15A is input into the executing unit 121.

The executing unit 121 then reads in an executing method included in the action knowledge information (step S3602).

The executing unit 121 then determines whether the action type is Web search (step S3603).

When reading in the executing method in the action knowledge information 1504, the executing unit 121 can confirm a definition of "action type: Web search". Therefore, when the action knowledge information 1504 is input, the word-attribution display-processing unit 112 determines that the selected action is Web search.

If the executing unit 121 determines the action knowledge information as Web search (Yes at step S3603), the executing unit 121 replaces a character string "$keyword$" described in the executing method in the action knowledge information with a character string included in the applicable range of the annotation (step S3604). In the example shown in Fig. 14, "$keyword$" is replaced with "Tozai-Denki". In other words, the character string "Tozai-Denki" is to be used as a search key.

The executing unit 121 then replaces "$search_url$" described in the executing method with a URL for a predefined Web search engine (for example, http://search.foobar.jp/) (step S3605).

The executing unit 121 then transmits the created URL to the predefined Web search engine in accordance with the GET procedure of the hypertext transfer protocol (HTTP), and executes a Web search by the search key "Tozai-Denki" (step S3606).

If the executing unit 121 determines that the action type is not a Web search (No at step S3603), the executing unit 121 determines whether the action type is a local search (step S3607).

If The executing unit 121 determines that the action type is a local search (Yes at step S3607), the executing unit 121 replaces the character string "$keyword$" described in the executing method with a character string included in the applicable range of the annotation (step S3608). In this way, the executing unit 121 creates a script for performing a local search.

The executing unit 121 then starts a computer program for executing a local search, outputs the created script to the started computer program, and executes the search (step S3609).

If the executing unit 121 determines that the action type is not a local search (No at step S3607), the executing unit 121 determines whether the action type is database (DB) registration (step S3610).

If the executing unit 121 determines that the action type is DB registration (Yes at step S3610), the executing unit 121 executes a script for registering a DB (for example, described in the structured query language (SQL)) as an external computer program (step 53611).

By contrast, if the executing unit 121 determines that the action type is not DB registration (No at step S3610), the executing unit 121 does not perform processing particularly, and terminates the processing.

The contents browsing apparatus 100 can execute actions to various input document data. A case of input document data where a word in the applicable range of the annotation is not added with word attribution is explained below.

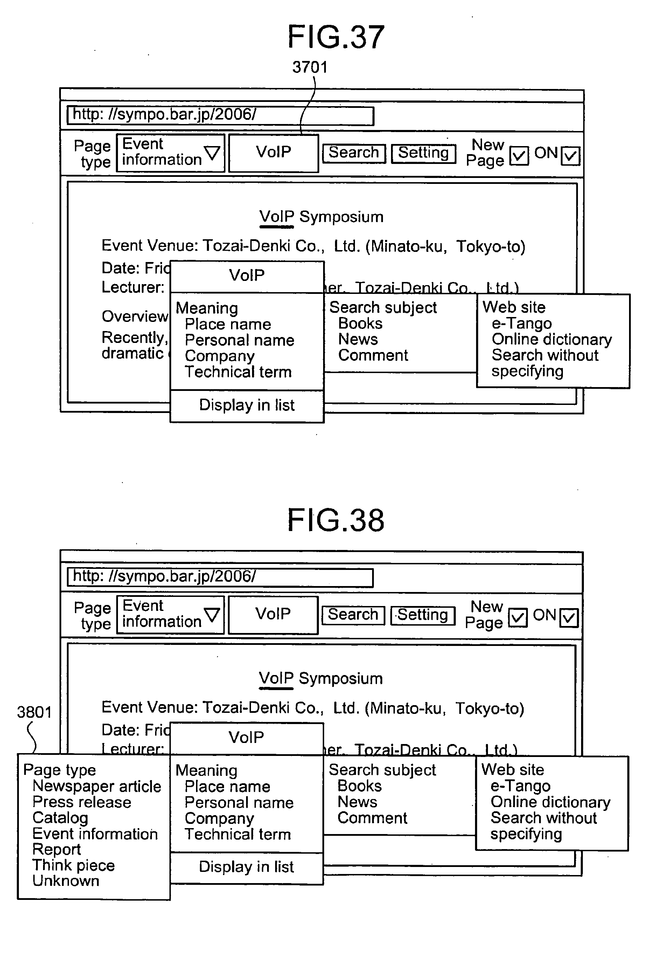

The following explanation is for an example when the user inputs an annotation at a different position onto the same input document data as the screen example shown in Fig. 9. As shown in Fig. 37, the user underlines a word "VoIP". However, no word attribution is added to the word "VoIP" in the HTML document shown in Fig. 5. Therefore, the intention extracting unit 116 extracts intention identifying-knowledge information based on the document type instead of the word attribution. In a process shown in Fig. 32, any word attribution is not set (Yes at step S3204), and the document type is not unknown (No at step S3205), so that the intention extracting unit 116 extracts intention identifying-knowledge information based on the document type "event information".

As a result, the intention display-processing unit 114 displays meanings (word attributions) and intentions associated with the document type. The action deciding unit 117 presents desired actions associated with a selected intention.

In this way, even if the attribution adding unit 102 cannot identify the word attribution of the word "VoIP", options extracted based on an identification result obtained by the document-type identifying unit 104 can be presented to the user. Thus, time and effort for the user to select the intention and the action can be reduced.

In an example shown in Fig. 38, even when "VoIP" without word attribution is underlined, the intention of the user is extracted based on the document type, additionally a revision of the document type can be received in this case. In other words, if a predetermined time elapses, meanwhile the user has been placing the cursor on the context menu, the document-type display unit 105 displays a list menu 3801 for page types. The document-type revising unit 106 revises the document type by selecting a page type from the list menu 3801. The contents browsing apparatus 100 is configured to perform such revision with an interface shown in Fig. 38. By using the interface, the user can carry out operation to the document-type revising unit 106 in an indistinctive manner from operation to the intention-selection receiving unit 115 or the action deciding unit 117.

In addition, in the case shown in Figs. 37 and 38, the word attribution that the attribution adding unit 102 cannot analyze can be presented to the user with the above interface. Accordingly, if the user selects a word from the presented words, the word-attribution association dictionary 133 shown in Fig. 3 can stores therein in associated manner the word and the word attribution. If the same word is included in the input document data, the attribution adding unit 102 adds the word attribution of the word appropriately.

For example, if the user selects an action "search without specifying (Web site)" from the screen shown in Fig. 38, a search result list from the contents browsing apparatus 100 is presented. Suppose the user selects a search result from the presented search result list, and then the screen shown in the area in Fig. 17 is presented. In this case, the history storage unit 122 registers therein information "What VoIP is" as shown in Fig. 20 as history information.

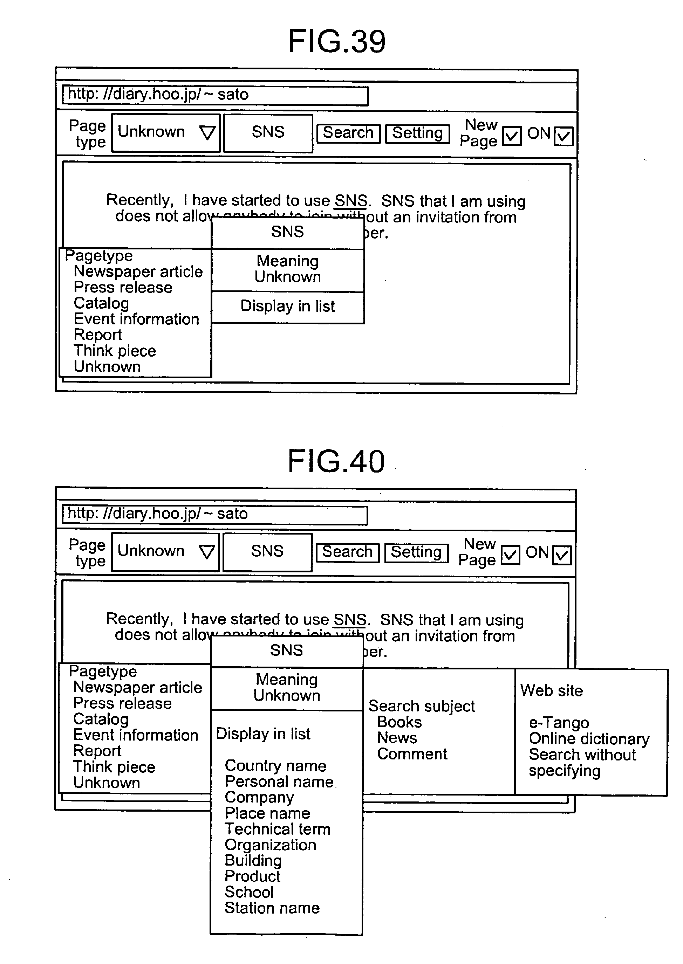

An example of displaying another input document data different from Fig. 9 is explained below. In the input document data displayed in the screen example shown in Fig. 39, the document-type identifying unit 104 cannot identify the document type and outputs as "unknown".

Furthermore, the attribution adding unit 102 cannot identify the word attribution of a word "SNS" underlined by the user. As a result, the intention extracting unit 116 cannot extract the intention of the user. Accordingly, the intention extracting unit 116 goes to step S3206 in the flowchart shown in Fig. 32, and outputs "unknown" as an intention identification result.

On a user interface shown in Fig. 40 that is to be displayed if the word attribution and the intention of the user are all unknown, the user selects a document type, and an appropriate word attribution from word attributions; the intention extracting unit 116 identifies an intention label of the user based on the selected document type and the selected word attribution; so that the intention display-processing unit 114 can display an arranged user interface.

In the above explanation, a case where the input annotation is an underline is explained. It is conceivable that the intention can be identified with conditions apart from the above example.

As another example, a case where an enclosure is input as an annotation is explained below. In the first embodiment, if an enclosure is detected as an annotation, a character string included in the applicable range of the annotation is registered into different databases in accordance with the document type and the word attribution. A screen example when an enclosure is input as an annotation is the same as shown in Fig. 28.

First of all, a case of identifying the intention of the annotation enclosure is explained below with reference to Fig. 32. The intention extracting unit 116 extracts "company name", "place name", and "date" as word attributions included in the applicable range of the annotation at step S3202.

Because the annotation is an enclosure, the intention extracting unit 116 then extracts records of the intention identifying-knowledge information in each of which annotation condition is enclosure from the intention identifying-knowledge storage unit 118 shown in Fig. 11 at step S3203. From the intention identifying-knowledge information shown in Fig. 11, records 1101 to 1104 are extracted.

At step S3204, because the intention extracting unit 116 has extracted the word attributions from the input document data, the intention extracting unit 116 goes to step S3208. The intention extracting unit 116 compares word attribution conditions of the extracted records of the intention identifying-knowledge information with the word attribution extracted from the input document data, and then extracts only a record of the intention identifying-knowledge information that includes a corresponding word attribution condition. However, a record of the intention identifying-knowledge information of which word attribution condition is ALL is extracted regardless of the word attribution extracted at step S3202.

In addition, there are some cases where a plurality of word attributions are extracted from the input document data, and a plurality of word attributions are defined as the word attribution conditions. In such cases, any method can be used for a process of comparing the word attributions extracted from the input document data with the word attribution conditions. In the first embodiment, it is assumed that a record of the intention identifying-knowledge information is to be extracted, if word attributions set as the word attribution condition in the record includes at least one of the word attributions extracted from the input document data information. Accordingly, records extracted by the intention extracting unit 116 at step S3208 are the record 1101 and the 1104.

Fig. 35 is an example of intention identifying-knowledge information extracted by the intention extracting unit 116, when an annotation enclosure is input. As shown in Fig. 35, intention labels are "DB registration: clipping" and "DB registration: schedule", so that the character strings enclosed with the annotation are to be registered into DBs in accordance with the document types.

The intention extracting unit 116 then rearranges the records of the intention identifying-knowledge information extracted based on a document type at step S3209. In the example, the extracted document type is "event information"; the document type condition of the extracted record 1101 is ALL; and the document type of the record 1104 is "event information"; so that the both match, therefore the intention extracting unit 116 does not perform rearrangement.

In this way, the intention extracting unit 116 outputs an identification result when the annotation is an enclosure. As described above, because intention identification results are plural, the intention display-processing unit 114 displays the intention identification results, and the intention-selection receiving unit 115 is to receive a selection of appropriate intention identifying-knowledge information.

The intention display-processing unit 114 then displays intention labels in the records of the intention identifying-knowledge information on the context menu. The intention-selection receiving unit 115 then receives a selection from among the displayed intention labels. An intention label of which the selection is received is "DB registration: clipping" or "DB registration: schedule".

In this case, the action deciding unit 117 also extracts action knowledge information corresponding to the intention labels. If the action deciding unit 117 extracts a plurality of records of the action knowledge information, the action deciding unit 117 presents the extracted records of the action knowledge information to the user, and lets the user to select appropriate action knowledge information.

If the action deciding unit 117 receives a selection of the intention label "DB registration: schedule", the action deciding unit 117 extracts records 1502 and 1503 of the action knowledge information shown in Fig. 15B.

The action deciding unit 117 then presents the extracted action knowledge information to the user in windows similar to those shown in Fig. 14. Suppose the user selects an action label "DB: schedule book".

In this case, the selected action knowledge information 1503 is output to the executing unit 121. The executing unit 121 then performs registration to the database in accordance with a process shown in Fig. 36.

Because the action type of the selected action knowledge information 1503 is "DB registration", the executing unit 121 goes to step S3611 from step S3610. The executing unit 121 then executes a script in the action knowledge information 1503 by calling an external computer program.

A scripts $region$ in the action knowledge information is converted with a character string included in the applicable range of the annotation on the input document data. The executing unit 121 then passes the script in which the character string is converted to an external computer program "schedule" after adding argument "-add". The external computer program "schedule" is an application program for managing schedule information, and explanation of details is omitted.

In addition, registration into a DB is not limited to a character string described in the applicable range, for example, the whole input document data can be passed to an external computer program as argument. In this case, a script for executing such processing is described in the action knowledge information.

Thus, the word attribution condition in a region provided with the annotation enclosure and the intention of the user are identified based on the document type condition, and an action is executed. Although the case where the intention identifying-knowledge information includes both the word attribution condition and the document type condition is explained here, the intention of the user can be identified, for example, only based on the document type condition.

In this case, the intention extracting unit 116 extracts the records 1101, 1102, and 1104 from the intention identifying-knowledge information shown in Fig. 11 by the document type "event information" as a search key in relation to the annotation shown in Fig. 28. The intention display-processing unit 114 then displays intention labels of the extracted records. Subsequently, the intention-selection receiving unit 115 is to receive a selection of an appropriate intention label from among the displayed intention labels.

In the following, other operations performed by the contents browsing apparatus 100 are explained.

First of all, a case of adding action knowledge information is explained below in detail. On the screen shown in Fig. 17, when the setting button 1703 is pressed, the menu of the setting button shown in Fig. 10 is displayed. By selecting "add this site to search destination", a record of action knowledge information is then added.

Specifically, when the screen shown in Fig. 17 is displayed, the action deciding unit 117 detects a record of the action knowledge information (in the case shown in Fig. 15A, a record 1501) by the intention label and the action label of a record 1602 in the history information present in the history storage unit 122 shown in Fig. 16A as a search key. The action deciding unit 117 then creates a copy of the searched record of the action knowledge information.

The action deciding unit 117 then extracts domain information about the site from reference information (URL) of the displayed input document data. The action deciding unit 117 then adds the extracted domain information to the script of the copied record of the action knowledge information in a predetermined format.

In the screen example shown in Fig. 17, the action deciding unit 117 adds a character string "yougo.foo.jp", which indicates domain information, to the end of the script of the record 4601 shown in Fig. Fig. 16B, in a format "&site=yougo.foo.jp".

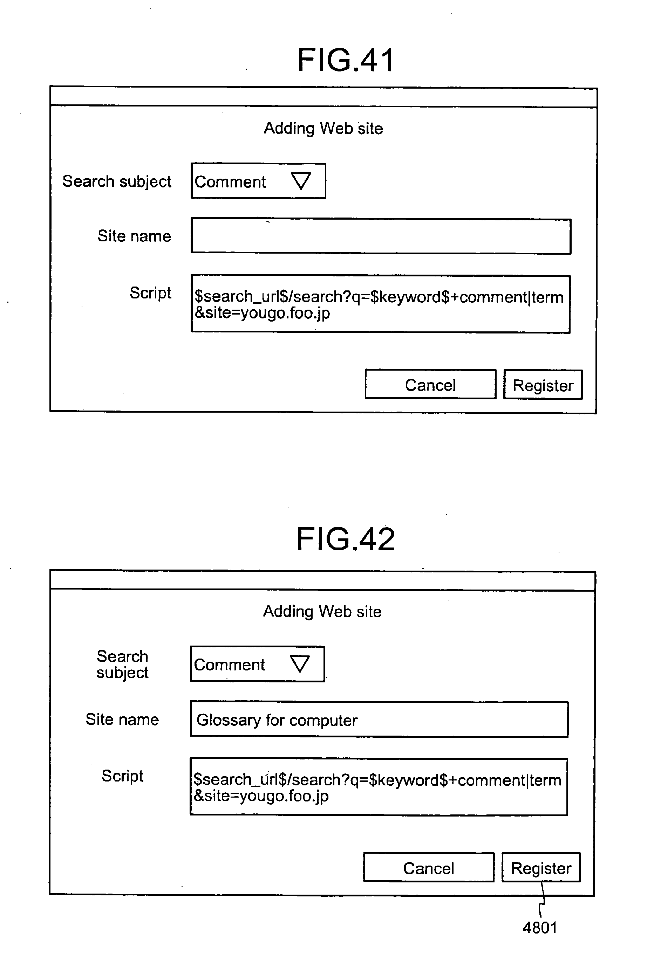

In an example of a window shown in Fig. 41, the search subject, the site name, and the script are displayed to the user. The user can revise the information as required.

In an example of a window shown in Fig. 42, the user specifies the site name of a site that the user registers. When the user presses a registration button 4801, a new record of the action knowledge information is registered.

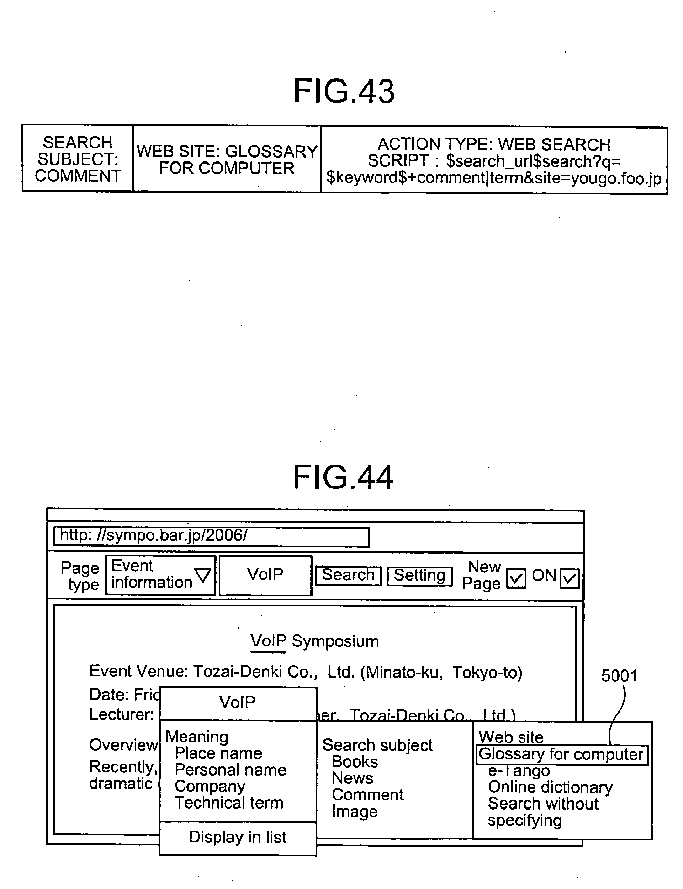

For example, a record of action knowledge information shown in Fig. 43 is added to the action storage unit 120 shown in Figs. 15A and 15B in associated manner to the intention labels present in the history information.

On the context menu displayed by the action deciding unit 117, as shown in Fig. 44, it can be confirmed that an item 5001 is added.

As shown as the item 5001 in Fig. 44, when the action deciding unit 117 renews and displays the user interface, the user can select a newly registered site as an action.

Furthermore, in the contents browsing apparatus 100, the intention identifying-knowledge information and the action knowledge information can be edited.

For example, when the contents browsing apparatus 100 receives a press of the setting button 906 shown in Fig. 9 from the user under a certain situation, the contents browsing apparatus 100 displays the setting menu shown in Fig. 10. If an item "edit search method" 1004 of the setting menu is selected, the contents browsing apparatus 100 can edit the intention identifying-knowledge information present in the intention identifying-knowledge storage unit 118, and the action knowledge information present in the action storage unit 120.

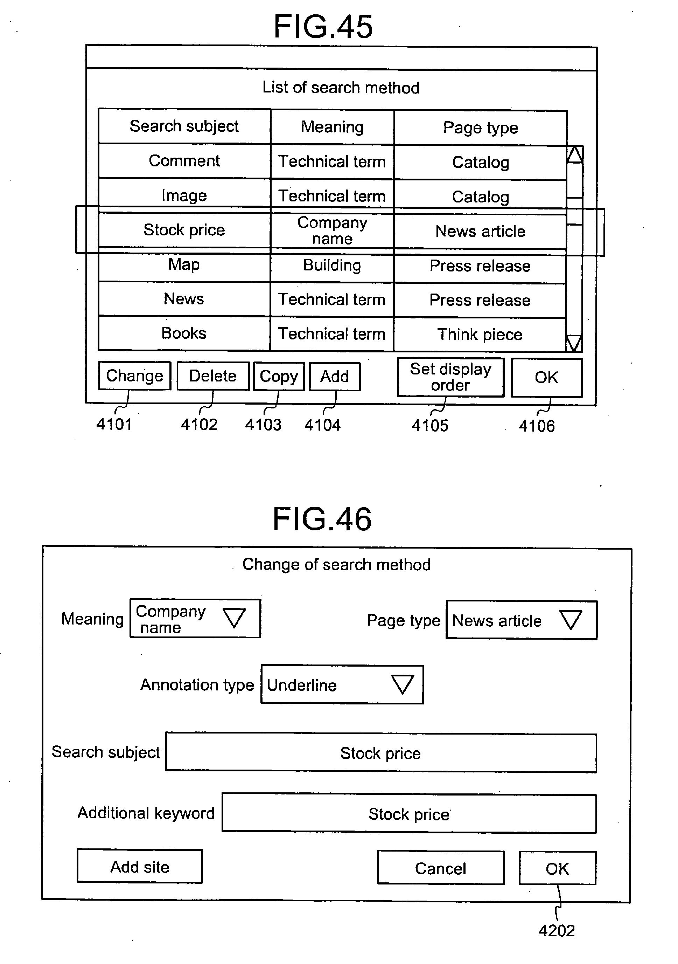

As shown in Fig. 45, if the item "edit search method" 1004 of the setting menu is selected, the intention identifying-knowledge revising unit 119 displays a list of intention identifying-knowledge information as shown in Fig. 11.

The user then selects a record of the intention identifying-knowledge information and presses a change button 4101, so that a window for revising the intention identifying-knowledge information and the action knowledge information is displayed.

On a screen shown in Fig. 46, after revising the intention identifying-knowledge information, the user presses an OK button 4202, so that the screen returns to that shown in Fig. 45. On the screen shown in Fig. 45, the user further presses an OK button 4106, so that a content of change is output to the intention identifying-knowledge revising unit 119 and the action deciding unit 117. The intention identifying-knowledge revising unit 119 then revises the intention identifying-knowledge information present in the intention identifying-knowledge storage unit 118 in accordance with a content of revision, and the action deciding unit 117 revises the action knowledge information present in the action storage unit 120.

Specifically, change in the word attribution, the document type, the annotation type, and the search subject is output to the intention identifying-knowledge revising unit 119. Change in the search subject and the additional keyword is output to the action deciding unit 117. The additional keyword is reflected in a script in the executing method in the action knowledge information in accordance with a predefined format.

Additionally, if an addition button 4104 shown in Fig. 45 is pressed, the screen for adding site shown in Fig. 42 is displayed. Accordingly, a condition to specify a site can be added to the action knowledge information.

A deletion button 4102 shown in Fig. 45 is used for deleting a record in the intention identifying-knowledge information specified by the user. A copy button 4103 is used for copying a record in the intention identifying-knowledge information specified by the user. In addition, if the user presses the addition button 4104, the contents browsing apparatus 100 creates a record of intention identifying-knowledge information and a record of action knowledge information each having a predefined attribution value as default, displays the window shown in Fig. 46, and encourages the user to input each attribution value in the window.

After receiving input of each attribution on the screen shown in Fig. 45, and the intention identifying-knowledge information and the action knowledge information are changed, if a press on the OK button 4106 is received, the intention identifying-knowledge revising unit 119 and the action deciding unit 117 reflect the change onto the intention identifying-knowledge information and the action knowledge information, respectively.

In addition, if a press on a display-order setting button 4105 is received, the intention identifying-knowledge revising unit 119 and the action deciding unit 117 display a screen for setting the display order.

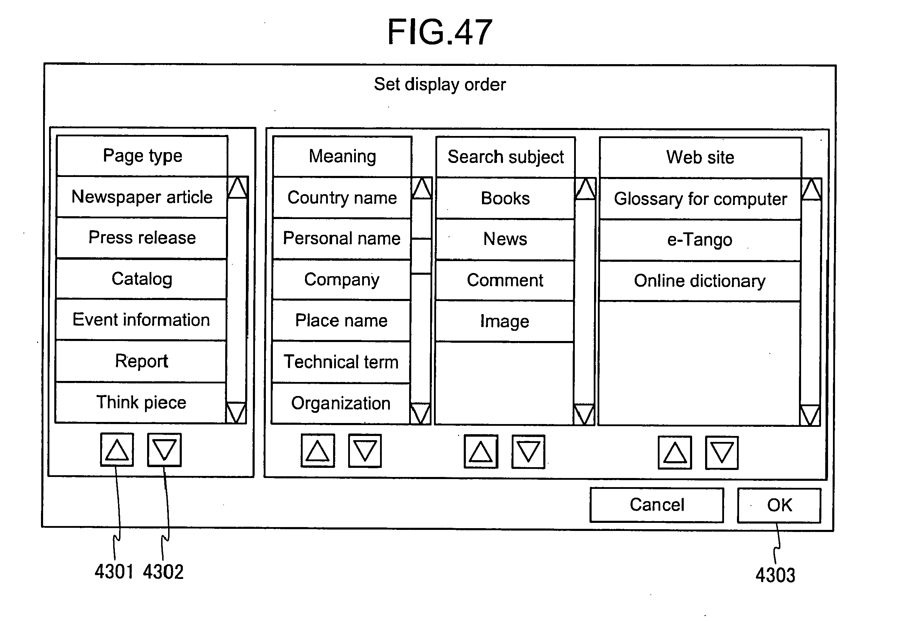

When a document type (page type) is selected on a window shown in Fig. 47, search subject attributions (intention labels) associated with the selected document type as the document type condition, and site attributions associated with the intention labels in the action knowledge information are displayed. Moreover, likewise when a word attribution is selected, search subject attributions (intention labels) associated with the selected word attribution as the word attribution condition, and site attributions associated with the intention labels in the action knowledge information are displayed.

The user then presses an arrow button under the window (for example, a button 4301 or 4302), so that the intention identifying-knowledge information and the action knowledge information can be rearranged in accordance with the selected attribution. After rearrangement, the user presses an OK button 4303, so that the intention identifying-knowledge revising unit 119 and the action deciding unit 117 reflect the changed display order onto the intention identifying-knowledge information and the annotation information. Thus, the annotation recognition unit 110 receives input of the annotation, and displays the attributions in accordance with the order when displaying the menu.

Furthermore, the user can change an initial setting of the contents browsing apparatus 100 by pressing the setting button 906 shown in Fig. 9 and selecting an item "initial setting" 1005 from the setting menu shown in Fig. 10.

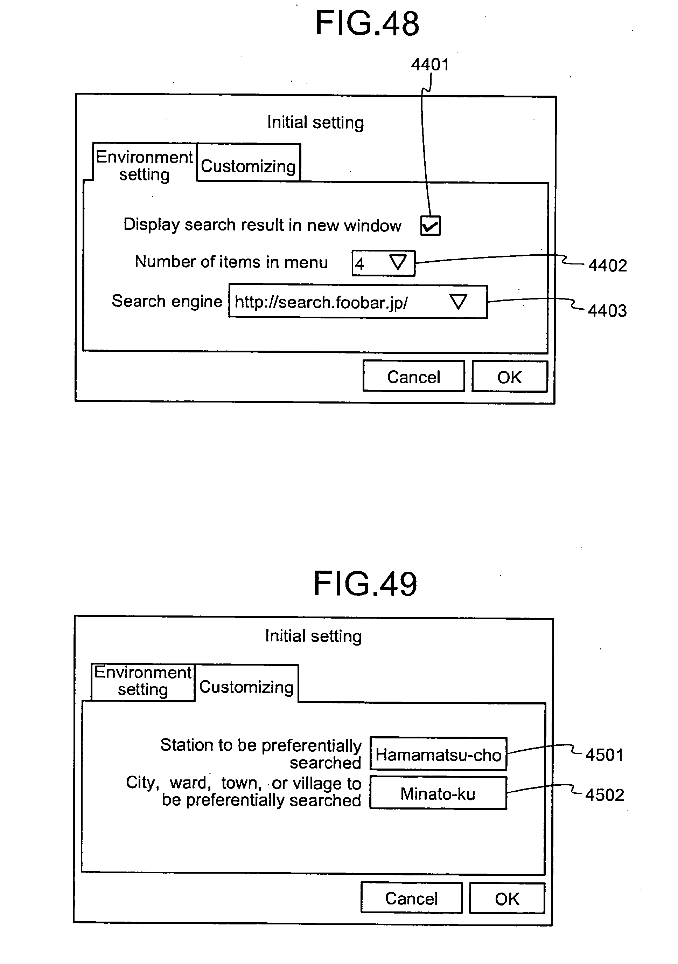

A check box 4401 on a screen example for setting the environment shown in Fig. 48 is used for specifying whether to display a search result list by renewing the already displayed screen, or to display the search result list by creating another new window, when executing a Web search or a local search as an action.

An item 4402 is a selector for specifying the maximum number of items to be presented in a column when displaying an intention identification result or a document type identification result in a menu, such as the context menu 1401 shown in Fig. 14. If the number of items of the intention identification result or the document type identification result to be displayed exceeds the specified value in the item 4402, excess items are not displayed. Instead, similarly to the window shown in Fig. 37, "Display in list" is displayed at the end of each column in the context menu. As "Display in list" is selected by the user, the contents browsing apparatus 100 displays all of the selected items in a list. Thus, the user can select a desired item.

An item 4403 is a selector for specifying the URL of a Web search engine to be used by the executing unit 121 when executing a Web search as an action type. Specifically, a selected URL in the item 4403 is replaced with "$search_url$" included in a script in the action knowledge information.

Furthermore, a user interface for specifying a search engine to be used for a local search or a storage directory of a file to be created when executing clipping can be prepared.

A field 4501 on a screen example of personal setting shown in Fig. 49 is used for specifying a station to be set as a preferential search condition in a search. A field 4502 is used for specifying a city, a ward, a town, or a village to be set as a preferential search condition in a search.

For example, a case where the user specifies the nearest station to the office in which the user works in the field 4501 is explained below. In the contents browsing apparatus 100, when the document type of the input document data is "event information", the user underlines the name of a station nearest to the venue of an event, and selects in the context menu an action to search for train transfer-guide information by Web search. Accordingly, the contents browsing apparatus 100 can perform a search for a transfer guide by setting the prespecified nearest station to the office as the start station of the transfer guide, and setting the nearest station to the event venue described in the applicable range of the annotation as the destination station.

In addition, after executing an action, the user can easily select a different action with respect to the same keyword by pressing the search button 905 shown in Fig. 9.

For example, if the user underlines the word VoIP As shown in Fig. 37, the word in the applicable range of the annotation is displayed in a field 3701. As the user selects an action from the context menu subsequently (for example, performing a Web search), another input document data is displayed. In this case, the word "VoIP", which is underlined previously, is displayed in the field 3701 as it is.

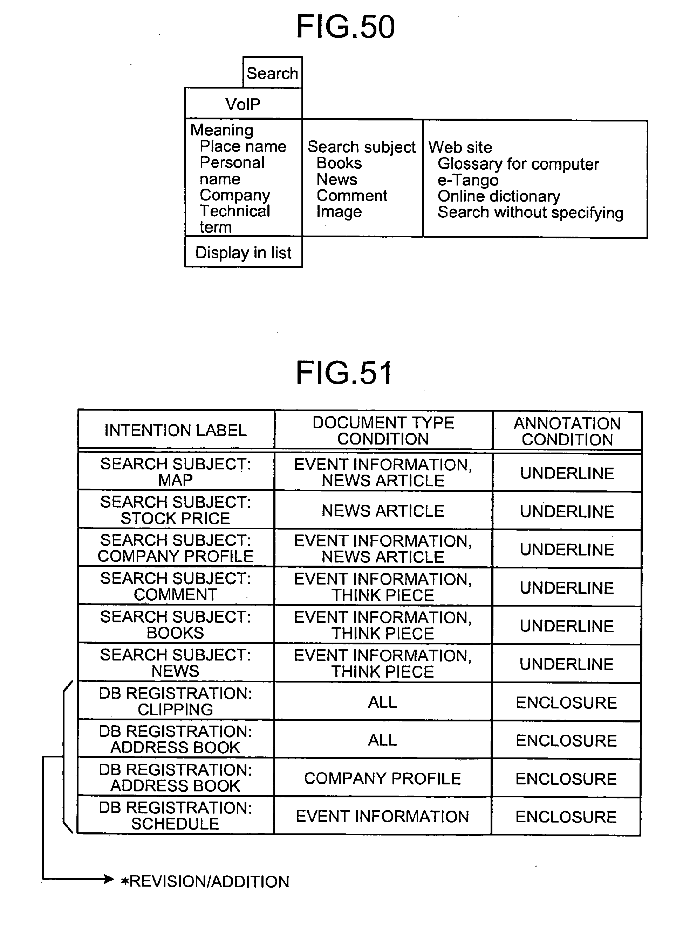

When pressing the search button shown in Fig. 37 under the above situation, a window shown in Fig. 50 is displayed, and the intention identifying-knowledge information and the action knowledge information presented when the word "VoIP" is underlined is again presented in the window.

Thus, after executing an action for the word "VoIP", the user can execute another action in relation to the same word. It is conceivable that, for example, after searching for the meaning of a word, "book" is specified as a search subject to look for related books, and an action is selected and executed.

Operations are not limited to the embodiments above described, and modifications exemplified below are also available.

In the first embodiment, if an annotation is input onto input document data, when displaying a context menu, the intention labels extracted based on the word attribution condition are displayed. However, when displaying intention labels, it is not limited to extraction based on the word attribution condition. As a first modification, a case where a context menu is displayed by extracting intention labels based on the document type condition instead of the word attribution condition.

Configurations of the contents browsing apparatus 100 according to a first modification are the same to the contents browsing apparatus 100 according to the first embodiment, and are assigned with the same reference numerals as in the first embodiment, so that explanations are omitted. In the following, only different processing is explained.

As shown in Fig. 51, in intention identifying-knowledge information present in the intention identifying-knowledge storage unit 118, an intention label, a document type, and an annotation condition are associated with each other. In other words, the intention extracting unit 116 extracts an intention label based on the document type condition and the annotation condition.

The process of identifying an intention of the user for the input document data performed by the intention extracting unit 116 is explained below with reference to 52.

To begin with, the intention extracting unit 116 acquires a record of the intention identifying-knowledge information of which the annotation condition corresponds to the type of an input annotation (steps S5301 to S5303).

The intention extracting unit 116 then determines whether the document type of the input document data is unknown (step S5304). If the intention extracting unit 116 determines that the document type is unknown (Yes at step S5304), the intention extracting unit 116 outputs "unknown" as the intention of the user is not identified (step S5306).

By contrast, if the intention extracting unit 116 determines that the document type is not unknown (No at step S5304), the intention extracting unit 116 extracts records of the intention identifying-knowledge information each of which includes the identified document type in the document type condition from the intention identifying-knowledge storage unit 118 (step S5305).

The intention extracting unit 116 then outputs the extracted records of the intention identifying-knowledge information as an identification result (step S5307).

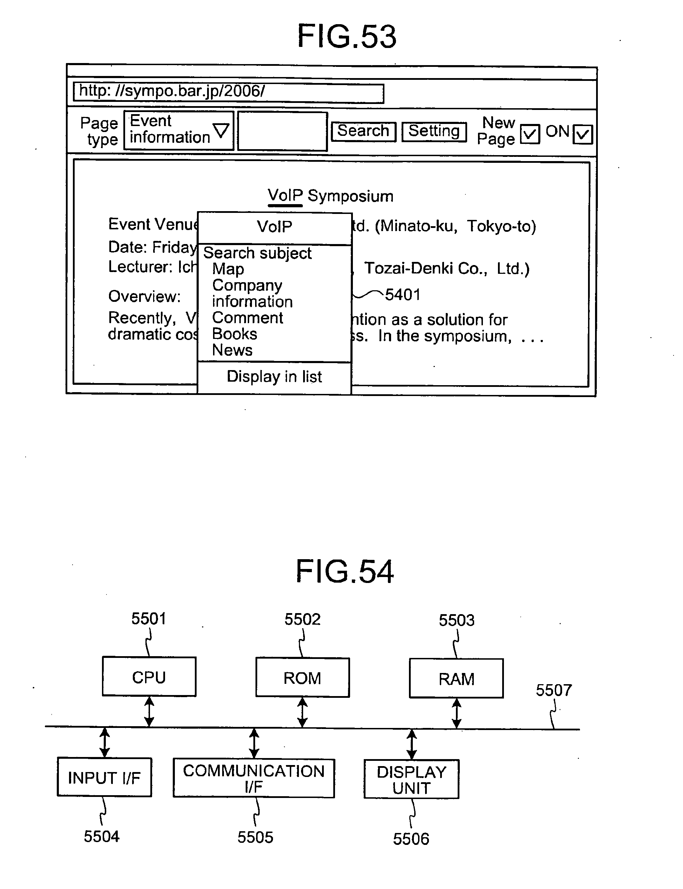

As shown in an example of a window in Fig. 53, the intention display-processing unit 114 displays intention labels that correspond to respective conditions of the document type.

Other processing in the first modification is similar to the first embodiment, so that explanation for it is omitted.

It is assumed in the first modification that word attributions and document structural attributions are added in advance onto the input document data to specify the document type of input document data. However, the document type can be specified based on information included in the input document data without adding the attributions.

The first embodiment does not limit identifiable annotations to "underline", "enclosure", and "others", and various annotations can be used as identifiable annotations.

As explained above, when an annotation is input onto a displayed input document data, the contents browsing apparatus 100 can decide an intention desired by a user or an action associated with the intention based on the type of the annotation and the document type. Accordingly, operations for deciding processing to be performed by the user onto the applicable range are reduced, consequently, a workload on the user is decreased. Moreover, the user can obtain an appropriate processing result with a simple operation.

Furthermore, in the first embodiment, because the contents browsing apparatus 100 identifies the intention of the user based on the word attribution of a word within the applicable range of the annotation, a more appropriate identification result can be obtained.

Moreover, if the word attribution of the word within the applicable range of the annotation is unknown, the contents browsing apparatus 100 can identify the intention of the user based on the document type. Accordingly, the above effect can be obtained in more cases.

In addition, a bookmark is created by combing at least one of the history of an action selected by the user and the document type, so that a content of input document data presented in the bookmark can be displayed in a format for the user to understand easily. Accordingly, the user can easily reuse useful information by referring to the bookmark.

Moreover, because the contents browsing apparatus 100 presents an action by identifying the intention of the user based on the document type, identification of the intention or an action to be executed can be presented to the user, without frequent update of a dictionary in which a word is associated with a word attribution, so that maintenance costs for the dictionary can be decreased. In addition, the user can register a word attribution to a word, so that an update work of the dictionary performed by an administrator is reduced, consequently, the maintenance costs can be decreased.

As shown in Fig. 54, the contents browsing apparatus 100 includes a read-only memory (ROM) 5502, a central processing unit (CPU) 5501, a random access memory (RAM) 5503, a communication interface (I/F) 5505, a display unit 5506, an input interface (I/F) 5504, and a bus 5507 as hardware configuration. The ROM 5502 stores therein computer programs, such as a program for viewing contents in the contents browsing apparatus 100. The CPU 5501 controls each unit in the contents browsing apparatus 100 in accordance with the computer programs present in the ROM 5502. The RAM stores therein various data needed for controlling the contents browsing apparatus 100. The communication I/F performs communications by connecting the contents browsing apparatus to a network. The display unit 5506 displays results obtained from processing performed by the contents browsing apparatus 100. The input I/F 5504 is configured for a user to input a request of processing. The bus 5507 connects between each unit. Moreover, the contents browsing apparatus 100 can be applied to a general computer that includes the configuration described above.

A contents browsing program to be executed in the contents browsing apparatus 100 according to the first embodiment is recorded and provided in an installable or executable file format on a computer-readable recording medium such as compact disk read only memory (CD-ROM), a flexible disk (FD), a compact disk recordable (CD-R), or a digital versatile disk (DVD).

In this case, the contents browsing program is designed to be read out from the computer-readable recording medium and to be executed on the contents browsing apparatus 100, so that the computer program is loaded onto a main memory in the contents browsing apparatus 100 and each unit as explained in Fig. 1 is created on the main memory.

Alternatively, the contents browsing program can be provided from a computer which stores therein the contents browsing program and is connected to a network, such as the Internet, by downloading via the network. The contents browsing program can otherwise be provided or distributed through the network such as the Internet.

Moreover, the contents browsing program can be provided in a form being incorporated in the ROM in advance.

The contents browsing program has module configuration that includes each unit described above. As practical hardware, each of the units is configured to be loaded and created on the main memory as the CPU reads out the contents browsing program from the recording medium, and executes the program.

Thus, the apparatus and the method (computer program) for processing information according to the embodiments of the present invention are useful as a technology for executing processing desired by a user when receiving input of an annotation from the user.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An information processing apparatus (100) comprising:
a storage (107) to store document data;
a document-category identifying unit (104) that identifies a document category indicating a use of a document based on a content of the document data;
a display unit (108) that displays the document data;
an input receiving unit (109) that receives an input designation to at least part of the document data displayed by the display unit (108);
a form identifying unit that identifies a designation form of the input designation;
a range specifying unit (110) that specifies an applicable range of the input designation; and
a processing unit (121) that processes the applicable range based on the designation form and the document category.

2. The apparatus (100) according to claim 1, wherein the document-category identifying unit (104) identifies the document category of the document data from among a plurality of predefined document categories based on a word attribution added to a word retained in the document data.

3. The apparatus (100) according to claim 2, further comprising an attribution adding unit (102) that adds a word attribution indicating a content of a word to the word based on a character string included in the word retained in the document data.

4. The apparatus (100) according to claim 3, further comprising:
a processing extracting unit (116) that extracts processes the applicable range based on at least one of the designation form, the word attribution added to the word included in the applicable range, and the document category;
a processing display unit (114) that displays the processing; and
a processing-selection receiving unit (115) that receives a selection of the processing displayed by the processing display unit (114), wherein
the processing unit (121) processes of which the selection is received.

5. The apparatus (100) according to claim 4, wherein the processing display unit (114) displays the processing in a predetermined order based on the document category.

6. The apparatus (100) according to any one of claims 3 to 5, further comprising:
a word-attribution display unit (112) that displays the word attribution of a word included in the applicable range; and
a word-attribution revising unit (113) that revises the word attribution displayed by the word-attribution display unit (112), in accordance with input from a user, wherein
the processing extracting unit (116) extracts processing to be applied to the applicable range based on at least one of the designation form, word attribution revised by the word-attribution revising unit (113), and the document category.

7. The apparatus (100) according to any one of claims 1 to 6, further comprising:
a document-attribution adding unit (103) that adds to the document data a document structural attribution indicating arrangement of data within documents data, wherein
the document-category identifying unit (104) identifies the document category of the document data from among a plurality of predefined document categories based on the document structural attribution.

8. The apparatus (100) according to any one of claims 1 to 7, further comprising:
a storage (120) unit that stores processing association information in which designation form information, document category information, and processing information to be applied to the applicable range are associated with each other, wherein
the processing unit (121) that processes the applicable range is the processing information associated with the designation form information and the document category information in the processing association information, corresponding to the designation form and the document category, respectively.

9. The apparatus (100) according to any one of claims 1 to 8, further comprising a bookmark management unit (123) that manages link information indicating any one of the document data and a source of the document data with respect to each of the document categories.

10. The apparatus (100) according to any one of claims 1 to 9, further comprising a bookmark display unit that displays title information indicating any one of document data managed by the bookmark management unit (123), and a source of the document data with respect to each of the document categories.

11. The apparatus (100) according to any one of claims 1 to 10, further comprising:
a document-category display unit (105) that displays the document category; and
a document-category revising unit (106) that revises the document category displayed by the document-category display unit (105), in accordance with input from a user, wherein
the processing unit (121) processes the applicable range based on the designation form and the document category revised by the document-category revising unit (106).

12. The apparatus (100) according to any one of claims 1 to 11, wherein
the input receiving unit (109) receives input of an annotation expressed as a trace or a combination of traces drawn by a pointing device onto document data displayed by the display unit,
the form identifying unit identifies a form of the annotation, and
the range specifying unit (110) specifies an applicable range of the annotation.

13. The apparatus (100) according to any one of claims 1 to 12, wherein the input receiving unit (109) receives at least one annotation from among underline, enclosure, character, character string, symbol, and symbol string.

14. The apparatus (100) according to any one of claims 1 to 13, further comprising a document input unit (101) that receives input of the document data, wherein
the document-category identifying unit (104) identifies the document category based on a content of the document data receiving input by the document input unit (101).

15. The apparatus (100) according to any one of claims 1 to 14, wherein the processing unit (121) that processes to performing a search and that a character string included in the applicable range is a search key, based on the identified designation form and the identified document category.

16. An information processing method comprising:
storing a document data in a storage (107);
identifying a document category indicating a use of a document based on a content of the document data;
displaying the document data by a display unit (108);
receiving an input of a designation to at least part of the document data displayed by the display unit (108);
identifying a designation form of the input designation;
specifying an applicable range of the input designation; and
processing the applicable range based on the designation form and the document category.

17. A computer program product having a computer readable medium including programmed instructions for deciding processing based on a designation input to document data, wherein the instructions, when executed by a computer, cause the computer to perform:
storing a document data in a storage (107);
identifying a document category indicating a use of a document based on a content of the document data;
displaying the document data by a display unit (108);
receiving an input of a designation to at least part of the document data displayed by the display unit (108);
identifying a designation form of the input designation;
specifying an applicable range of the input designation; and
processing the applicable range based on the designation form and the document category.
